# EUROPEAN PATENT APPLICATION

(11) **EP 4 626 071 A1**
(43) Date of publication of application: **01.10.2025**
(21) Application number: 24752678.3
(22) Date of filing: 18.01.2024
(51) Int. Cl.: H04W 28/06

(54) **INFORMATION TRANSMISSION METHOD AND APPARATUS**

(30) Priority: 09.02.2023 CN 202310130375
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN); HU, Xingxing, Shenzhen, Guangdong 518129 (CN)
(74) Representative: Gill Jennings & Every LLP
(86) International application number: PCT/CN2024/073044
(87) International publication number: WO 2024/164821

(57) **Abstract**

This application provides an information transmission method and apparatus, to provide support for alternately sending another RRC message when a plurality of radio resource control RRC message segmentations corresponding to target information are sent, thereby reducing impact of transmission of the target information on transmission of the another RRC message, and improving user experience. The method includes: A transmitting end determines a plurality of radio resource control RRC message segmentations based on to-be-sent target information, where any RRC message segmentation in the plurality of RRC message segmentations includes partial information of the target information and at least one of the following information: target identification information indicating the target information, RRC identification information indicating an RRC message to which the any RRC message segmentation belongs, and segment identification information indicating the any RRC message segmentation. The transmitting end sends the plurality of RRC message segmentations to a receiving end.

## Description

This application claims priority to Chinese Patent Application No. 202310130375.9, filed with the China National Intellectual Property Administration on February 9, 2023 and entitled "INFORMATION TRANSMISSION METHOD AND APPARATUS", which is incorporated herein by reference in its entirety.

### TECHNICAL FIELD

This application relates to the field of communication technologies, and in particular, to an information transmission method and apparatus.

### BACKGROUND

A manner of information transmission between an access network device and user equipment (user equipment, UE) includes control plane-based transmission and user plane-based transmission. Transmission content transmitted on a control plane is signaling, and transmission content transmitted on a user plane is a data packet. When the access network device and the UE transmit target information on the control plane, the target information that needs to be transmitted is usually carried in a radio resource control (radio resource control, RRC) message.

When being transmitted, the RRC message needs to be sent to a packet data convergence protocol (packet data convergence protocol, PDCP) layer through an RRC layer. At the PDCP layer, the RRC message is encapsulated into a service data unit (service data unit, SDU), and then is still transmitted in a form of the SDU. Because it is stipulated in the 3rd generation partnership project (3rd generation partnership project, 3GPP) protocol that a maximum size of an SDU is 9k bytes (byte, B), when an RRC message is greater than 9kB, the RRC message needs to be divided into a plurality of segments of RRC messages, and then another RRC message is transmitted after the plurality of segments of RRC messages are continuously transmitted. For example, when the access network device transmits a 20kB RRC message to the UE, the access network device divides the RRC message into three segments, and the three segments of the RRC message are sequentially and continuously transmitted to the UE. After receiving the three segments of the RRC message, the UE assembles target information included in the RRC message.

However, a current information transmission method affects transmission of another RRC message, causing poor user experience.

### SUMMARY

This application provides an information transmission method and apparatus, to provide support for alternately sending another RRC message when a plurality of RRC message segmentations corresponding to target information are sent. In this way, in some scenarios, impact of transmission of the target information on transmission of another RRC message can be reduced, and user experience can be improved.

According to a first aspect, an information transmission method is provided, and includes: A transmitting end determines a plurality of radio resource control RRC message segmentations based on to-be-sent target information, where any RRC message segmentation in the plurality of RRC message segmentations includes partial information of the target information and at least one of the following information: target identification information indicating the target information, RRC identification information indicating an RRC message to which the any RRC message segmentation belongs, and segment identification information indicating the any RRC message segmentation. The transmitting end sends the plurality of RRC message segmentations to a receiving end.

According to the information transmission method in this application, the plurality of RRC message segmentations including the target information include the target identification information indicating the target information, the RRC identification information indicating the RRC message to which the RRC message segmentation belongs, and the segment identification information indicating the any RRC message segmentation, so that in a process of sending a plurality of RRC segments, even if another RRC message is alternately sent, the receiving end can determine the plurality of RRC message segmentations including the target information. In this way, the plurality of RRC segments including the target information include complete information, and therefore even if the another RRC message is alternately sent when the plurality of RRC message segmentations are sent, complete target information and other information can be obtained through splicing at the receiving end. Therefore, support can be provided for alternately sending the another RRC message when the plurality of RRC message segmentations corresponding to the target information are sent. In this way, in some scenarios, impact of transmission of the target information on transmission of the another RRC message can be reduced, and user experience can be improved.

It should be understood that the target information may be any information, for example, may be an AI model or an AI module. The AI model may be a complete AI model that can run independently at the receiving end (a format and a compilation environment of the AI model are not limited), or may be an AI-related functional module that runs at the receiving end to obtain specific output for use by the transmitting end, or may even be another non-AI-related functional module. This is not specifically limited in this application.

In some implementations of the first aspect, that the transmitting end sends the plurality of RRC message segmentations to the receiving end includes: The transmitting end alternately sends the plurality of RRC message segmentations to the receiving end based on priorities of RRC messages corresponding to respective RRC identification information of the plurality of RRC message segmentations.

It should be understood that different RRC messages have different priorities, and the transmitting end may first send an RRC message with a higher priority, and then send an RRC message with a lower priority. For example, the plurality of RRC message segmentations include a first RRC message segmentation, a second RRC message segmentation, and a third RRC message segmentation. The first RRC message segmentation belongs to a first RRC message; the second RRC message segmentation and the third RRC message segmentation belong to a second RRC message. When a priority of the first RRC message is higher than that of the second RRC message, the transmitting end first sends the first RRC message segmentation, and then sends the second RRC message segmentation and the third RRC message segmentation.

In some implementations of the first aspect, before the transmitting end determines the plurality of radio resource control RRC message segmentations based on the to-be-sent target information, the method further includes: The transmitting end obtains capability information of the receiving end, where the capability information includes information indicating buffer space of the receiving end and information indicating a maximum quantity of RRC segments supported by the receiving end. The transmitting end determines, based on the capability information, that the receiving end has a capability of receiving the plurality of RRC message segmentations.

It should be understood that the buffer space refers to remaining storage space of the receiving end. For example, when the receiving end is UE, and the remaining storage space of the UE is 500 kB, the buffer space of the UE is 500 kB. The maximum quantity of RRC segments refers to a maximum value of a quantity of RRC message segmentations that can be received by the receiving end. For example, when the receiving end is UE, and the UE can receive a maximum of five RRC message segmentations, the maximum quantity of RRC segments is 5. Different devices have different buffer space and support different maximum segment quantities of received RRC message segmentations. The transmitting end can determine, based on the capability information of the receiving end, whether the receiving end has a capability of receiving the plurality of RRC message segmentations. When the receiving end has a capability of receiving the plurality of RRC message segmentations, the transmitting end sends the plurality of RRC message segmentations to the receiving end. When the receiving end does not have a capability of receiving the plurality of RRC message segmentations encapsulated with the target information, for example, buffer space of the receiving end is less than a data volume of the target information, or a maximum quantity of RRC segments supported by the receiving end is less than a quantity of the plurality of RRC message segmentations, the transmitting end may not send the target information to the receiving end, or the transmitting end may select other target information, determine a plurality of other RRC message segmentations based on the other target information, and send the plurality of other RRC message segmentations to the receiving end. For example, the transmitting end is a base station, the receiving end is UE, and the target information is a first AI model. The base station determines six first RRC message segmentations based on the first AI model. When a maximum quantity of RRC segments supported by the UE is 5, the UE does not have a capability of receiving the six first RRC message segmentations. The base station may change the target information to a second AI model, and may determine four second RRC message segmentations based on the second AI model. Then, the base station sends the four second RRC message segmentations to the UE.

In some implementations of the first aspect, the plurality of RRC message segmentations are sent based on a first-type signaling radio bearer SRB and/or a second-type SRB, a maximum quantity of segments supported by the second-type SRB is greater than a maximum quantity of segments of the first-type SRB, and a transmission priority of the second-type SRB is lower than a transmission priority of the first-type SRB.

It should be understood that the RRC message is carried on a signaling radio bearer (signaling radio bearer, SRB) and transmitted by the transmitting end to the receiving end. The first-type SRB may be five SRBs specified in the 3GPP protocol: SRB 0, SRB 1, SRB 2, SRB 3, and SRB 4. The second-type SRB may be a newly established SRB different from the SRB, that is, the SRB 0, the SRB 1, the SRB 2, the SRB 3, and the SRB 4, for example, may be an SRB 5. A priority of the second-type SRB is lower than priorities of the SRB 0, the SRB 1, the SRB 2, the SRB 3, and the SRB 4. When sending an RRC message on different SRBs, the transmitting end may preferentially send an RRC message corresponding to an SRB with a higher priority. For example, the SRB 5 is the second-type SRB. When the transmitting end needs to send a first RRC message on the SRB 2, and needs to send a second RRC message on the SRB 5, the transmitting end first sends the first RRC message on the SRB 2, and then sends the second RRC message on the SRB 5.

In some implementations of the first aspect, when the plurality of RRC message segmentations are sent based on the second-type SRB, if no other RRC message needs to be delivered on the second-type SRB, and an air interface load of the transmitting end meets a preset low load condition, an RRC message segmentation with a large data volume that is included in the plurality of RRC message segmentations is preferentially sent; or if another RRC message needs to be delivered on the second-type SRB, and/or an air interface load of the transmitting end does not meet a preset low load condition, an RRC message segmentation with a small data volume that is included in the plurality of RRC message segmentations is preferentially sent.

It should be understood that the preset low load condition is a preset condition, and may be that a data volume of a to-be-sent RRC message is less than or equal to a first preset threshold, where the first preset threshold is any value greater than 0, for example, may be 5 MB. Alternatively, the preset low load condition may be that a quantity of to-be-sent RRC message segmentations is less than or equal to a second preset threshold, where the second preset threshold is any positive integer, for example, may be 10. The RRC message segmentation with a large data volume is an RRC message segmentation with a larger data volume in RRC message segmentations included in the plurality of RRC message segmentations.

In some implementations of the first aspect, in a process in which the transmitting end sends the plurality of RRC message segmentations to the receiving end, if an RRC message with a higher priority than the plurality of RRC message segmentations is received, the transmitting end preferentially sends the RRC message with the higher priority than the plurality of RRC message segmentations.

It should be understood that the RRC message with the higher priority than the plurality of RRC message segmentations may not include the target information, that is, the RRC message with the higher priority than the plurality of RRC message segmentations is signaling used to transmit information other than the target information. The RRC message with the higher priority than the plurality of RRC message segmentations may alternatively include the target information. For example, the target information includes a first part of target information and a second part of target information, the first part of target information is encapsulated into the plurality of RRC message segmentations, and the second part of target information is encapsulated into the RRC message with the higher priority than the plurality of RRC message segmentations. In this case, in a process of transmitting the plurality of RRC message segmentations, the transmitting end receives the RRC message with the higher priority than the plurality of RRC message segmentations. In this case, the transmitting end preferentially sends the RRC message with the higher priority than the plurality of RRC message segmentations.

In some implementations of the first aspect, the transmitting end includes N to-be-sent RRC messages, and N is a positive integer; and that the transmitting end determines the plurality of radio resource control RRC message segmentations based on the to-be-sent target information includes: The transmitting end encapsulates, based on an available capacity of a to-be-sent RRC message segmentation in the N to-be-sent RRC messages, the partial information of the target information into a to-be-sent RRC message segmentation whose available capacity meets a requirement, to obtain the plurality of RRC message segmentations.

It should be understood that the to-be-sent RRC message is all RRC messages that need to be sent by the transmitting end, and the to-be-sent RRC message segmentation is obtained when the transmitting end divides the to-be-sent RRC message. An RRC message segmentation in which the partial information of the target information is encapsulated in to-be-sent RRC message segmentations belongs to the plurality of RRC message segmentations. A quantity of to-be-sent RRC message segmentations is greater than or equal to a quantity of the plurality of RRC message segmentations. For example, the plurality of RRC message segmentations include a first RRC message segmentation and a second RRC message segmentation, and the to-be-sent RRC message segmentations include a first RRC message segmentation, a second RRC message segmentation, and a third RRC message segmentation, where the first RRC message segmentation and the second RRC message segmentation each include the partial information of the target information, and the third RRC message segmentation does not include the target information. The available capacity may be a difference between a data volume of the to-be-sent RRC message segmentation and a maximum data volume of the RRC message segmentation.

In some implementations of the first aspect, the transmitting end includes an RRC layer and a target information transport layer; and that the transmitting end encapsulates, based on an available capacity of a to-be-sent RRC message segmentation in each of the N to-be-sent RRC messages, the partial information of the target information into a to-be-sent RRC message segmentation whose available capacity meets a requirement includes: The target information transport layer sends an indication message to the RRC layer, where the indication message indicates the RRC layer to send the available capacity of the to-be-sent RRC message segmentation in each of the N to-be-sent RRC messages to the target information transport layer; the RRC layer receives the indication message from the target information transport layer; the RRC layer sends the available capacity of the to-be-sent RRC message segmentation in each of the N to-be-sent RRC messages to the target information transport layer based on the indication message; the target information transport layer receives the available capacity of the to-be-sent RRC message segmentation in each of the N to-be-sent RRC messages from the RRC layer; the target information transport layer divides the target information into at least one segment of target information based on the available capacity of the to-be-sent RRC message segmentation in each of the N to-be-sent RRC messages from the RRC layer; the target information transport layer determines, based on the at least one segment of target information and the available capacity of the to-be-sent RRC message segmentation in each of the N to-be-sent RRC messages, a correspondence between any segment of target information in the at least one segment of target information and a to-be-sent RRC message segmentation used to encapsulate the any segment of target information; the target information transport layer sends the at least one segment of target information and the correspondence to the RRC layer; the RRC layer receives the at least one segment of target information and the correspondence from the target information transport layer; and the RRC layer encapsulates, based on the correspondence, the any segment of target information into the to-be-sent RRC message segmentation corresponding to the any segment of target information.

It should be understood that the available capacity of the to-be-sent RRC message segmentation in each of the N to-be-sent RRC messages may refer to a size of a container capacity that can be added to an SDU corresponding to the to-be-sent RRC message segmentation included in the N to-be-sent RRC messages. It is stipulated in the 3GPP specifications that a size of an SDU cannot exceed 9 kB. Therefore, there is an available capacity for to-be-sent RRC message segmentations whose data volumes are less than 9 kB. The correspondence indicates a correspondence between any segment of target information in the at least one segment of target information at the RRC layer and a to-be-sent RRC message segmentation that is to be encapsulated into the any segment of target information.

In some implementations of the first aspect, the transmitting end includes an RRC layer and a target information transport layer; and that the transmitting end encapsulates, based on an available capacity of a to-be-sent RRC message segmentation in each of the N to-be-sent RRC messages, the partial information of the target information into a to-be-sent RRC message segmentation whose available capacity meets a requirement includes: The RRC layer sends the available capacity of the to-be-sent RRC message segmentation in each of the N to-be-sent RRC messages to the target information transport layer; the target information transport layer receives the available capacity of the to-be-sent RRC message segmentation in each of the N to-be-sent RRC messages from the RRC layer; the target information transport layer divides the target information into at least one segment of target information based on the available capacity of the to-be-sent RRC message segmentation in each of the N to-be-sent RRC messages from the RRC layer; the target information transport layer determines, based on the at least one segment of target information and the available capacity of the to-be-sent RRC message segmentation in each of the N to-be-sent RRC messages, a correspondence between any segment of target information in the at least one segment of target information and a to-be-sent RRC message segmentation used to encapsulate the any segment of target information; the target information transport layer sends the at least one segment of target information and the correspondence to the RRC layer; the RRC layer receives the at least one segment of target information and the correspondence from the target information transport layer; and the RRC layer encapsulates, based on the correspondence, the any segment of target information into the to-be-sent RRC message segmentation corresponding to the any segment of target information.

Optionally, the RRC layer periodically sends, to the target information transport layer, the available capacity of the to-be-sent RRC message segmentation in each of the N to-be-sent RRC messages.

Optionally, when the available capacity of the to-be-sent RRC message segmentation in the N to-be-sent RRC messages meets the preset condition, the RRC layer periodically sends the available capacity of the to-be-sent RRC message segmentation in each of the N to-be-sent RRC messages to the target information transport layer.

In some implementations of the first aspect, the transmitting end includes an RRC layer and a target information transport layer; and that the transmitting end determines the plurality of radio resource control RRC message segmentations based on the to-be-sent target information includes: The target information transport layer divides the target information into at least one segment of target information; the target information transport layer sends the at least one segment of target information to the RRC layer; the RRC layer receives the at least one segment of target information from the target information transport layer; and the RRC layer encapsulates, based on the at least one segment of target information and an available capacity of a to-be-sent RRC message segmentation in each of the N to-be-sent RRC messages, each segment of target information in the at least one segment of target information into each to-be-sent RRC message segmentation whose available capacity meets a requirement.

Optionally, the target information transport layer sends, to the RRC layer, target identification information corresponding to any segment of target information in the at least one segment of target information, segment identification information, a data amount of the any segment of target information, identification information, partial information of target information included in the any segment of target information, and an SRB that is expected to be transmitted.

In some implementations of the first aspect, after the transmitting end sends the plurality of RRC message segmentations to the receiving end, the method further includes: The RRC layer sends a completion indication message to the target information transport layer, where the completion indication message indicates that transmission of the target information is completed.

It should be understood that, after the RRC layer completes transmission of the plurality of RRC message segmentations, the RRC layer sends the completion indication message to the target information transport layer. In this way, the target information transport layer may process a remaining task. For example, when the target information is a first AI model, the remaining task may be transmitting a second AI model. In this way, after completing transmission of the plurality of RRC message segmentations encapsulated with the first AI model, the RRC layer sends the completion indication message to the target information transport layer, so that the target information transport layer can continue to process the second AI model.

In some implementations of the first aspect, the any RRC message segmentation further includes identification information, and the identification information indicates whether partial target information in the any RRC message segmentation is a last part of the target information.

It should be understood that each of the plurality of RRC message segmentations includes identification information, and the identification information may be "a last segment" or "a non-last segment". In this way, after receiving the plurality of RRC message segmentations, the receiving end obtains partial information of a plurality of pieces of target information, and can determine, based on the identification information, whether the partial information of the target information is a last part of the target information, thereby helping improve efficiency of splicing the target information by the receiving end.

In some implementations of the first aspect, the target identification information indicating the target information, the RRC identification information indicating the RRC message to which the any RRC message segmentation belongs, the segment identification information indicating the any RRC message segmentation, and the identification information are all information elements of the any RRC message segmentation.

It should be understood that the target identification information, the RRC identification information, and the segment identification information may be encapsulated into a container (container) of the RRC message segmentation, or may be encapsulated outside a container of the RRC message segmentation. When the target identification information, the RRC identification information, and the segment identification information are encapsulated outside the container of the RRC message segmentation, the target identification information, the RRC identification information, and the segment identification information are information elements of the RRC message segmentation.

According to a second aspect, another information transmission method is provided, and includes: A receiving end receives a plurality of radio resource control RRC message segmentations from a transmitting end, where any RRC message segmentation in the plurality of RRC message segmentations includes partial information of target information and at least one of the following information: target identification information indicating the target information, RRC identification information indicating an RRC message to which the any RRC message segmentation belongs, and segment identification information indicating the any RRC message segmentation; and the receiving end splices, based on the target identification information, the RRC identification information, and the segment identification information, partial information that is of the target information and that is included in the plurality of RRC message segmentations into the target information.

In some implementations of the second aspect, before the receiving end receives the plurality of radio resource control RRC message segmentations from the transmitting end, the method further includes: The receiving end sends capability information of the receiving end to the transmitting end, where the capability information includes information indicating buffer space of the receiving end and information indicating a maximum quantity of RRC segments supported by the receiving end.

In some implementations of the second aspect, the receiving end includes an RRC layer and a target information receiving layer; and that the receiving end receives the plurality of radio resource control RRC message segmentations from the transmitting end includes: The RRC layer receives the plurality of RRC message segmentations from the transmitting end; the RRC layer decodes the plurality of RRC message segmentations to obtain a plurality of message segmentations, where any message segmentation in the plurality of message segmentations includes partial information of target information and at least one of the following information: target identification information indicating the target information, RRC identification information indicating an RRC message to which the any message segmentation belongs, and segment identification information indicating the any message segmentation; the RRC layer sends the plurality of message segmentations to the target information receiving layer; and the target information receiving layer receives the plurality of message segmentations from the RRC layer.

In some implementations of the second aspect, the any RRC message segmentation further includes identification information, and the identification information indicates whether partial target information in the any RRC message segmentation is a last part of the target information.

In some implementations of the second aspect, the receiving end includes an RRC layer and a target information receiving layer; and the target identification information indicating the target information, the RRC identification information indicating the RRC message to which the any RRC message segmentation belongs, the segment identification information indicating the any RRC message segmentation, and the identification information are information elements of the any RRC message segmentation. That the receiving end receives the plurality of radio resource control RRC message segmentations from the transmitting end includes: The RRC layer receives the plurality of RRC message segmentations from the transmitting end; the RRC layer decodes the plurality of RRC message segmentations to obtain a plurality of message segmentations, where any message segmentation in the plurality of message segmentations includes partial target information; the RRC layer sends the plurality of message segmentations and an information element of the any RRC message segmentation to the target information receiving layer; and the target information receiving layer receives the plurality of message segmentations and the information element of the any RRC message segmentation from the RRC layer.

According to a third aspect, an information transmission apparatus is provided, and is configured to perform the method according to any one of the possible implementations of the first aspect. Specifically, the apparatus includes a module configured to perform the method according to any one of the possible implementations in the first aspect.

According to a fourth aspect, another information transmission apparatus is provided, and is configured to perform the method according to any one of the possible implementations of the second aspect. Specifically, the apparatus includes a module configured to perform the method according to any one of the possible implementations of the second aspect.

According to a fifth aspect, this application provides another data transmission sensing apparatus, including a processor. The processor is coupled to a memory and may be configured to execute instructions in the memory, to implement the method according to any one of the possible implementations of the first aspect or the second aspect. Optionally, the apparatus further includes the memory. Optionally, the apparatus further includes a communication interface, and the processor is coupled to the communication interface.

In an implementation, the apparatus is a terminal device. When the apparatus is a terminal device, the communication interface may be a transceiver or an input/output interface.

In another implementation, the apparatus is a chip configured in a terminal device. When the apparatus is a chip configured in a terminal device, the communication interface may be an input/output interface.

According to a sixth aspect, a processor is provided, and includes an input circuit, an output circuit, and a processing circuit. The processing circuit is configured to receive a signal through the input circuit, and transmit a signal through the output circuit, so that the processor performs the method according to any one of the possible implementations of the first aspect or the second aspect.

In a specific implementation procedure, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a seventh aspect, a processing apparatus is provided, and includes a processor and a memory. The processor is configured to read instructions stored in the memory, and may receive a signal through a receiver, and transmit a signal through a transmitter, to perform the method according to any one of the possible implementations of the first aspect or the second aspect.

Optionally, there are one or more processors, and there are one or more memories.

Optionally, the memory may be integrated with the processor, or the memory and the processor are separately disposed.

In a specific implementation procedure, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

It should be understood that, a related data exchange procedure such as sending of indication information may be a procedure of outputting the indication information from the processor, and receiving of capability information may be a procedure of receiving the input capability information by the processor. Specifically, data output by the processor may be output to a transmitter, and input data received by the processor may be from a receiver. The transmitter and the receiver may be collectively referred to as a transceiver.

The processing apparatus in the seventh aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in a memory. The memory may be integrated into the processor, or may be located outside the processor and exist independently.

According to an eighth aspect, a computer program product is provided. The computer program product includes a computer program (which may also be referred to as code or instructions). When the computer program is run, a computer is enabled to perform the method according to any one of the possible implementations of the first aspect or the second aspect.

According to a ninth aspect, a computer-readable storage medium is provided. The computer-readable storage medium includes a computer program (which may also be referred to as code or instructions). When the computer program is run on a computer, the computer is enabled to perform the method according to any one of the possible implementations of the first aspect or the second aspect.

### BRIEF DESCRIPTION OF DRAWINGS

FIG. 1 is a diagram of a gNB architecture according to an embodiment of this application;
FIG. 2 is a schematic flowchart of an information transmission method according to an embodiment of this application;
FIG. 3 is a schematic flowchart of another information transmission method according to an embodiment of this application;
FIG. 4 is a schematic flowchart of transmitting a plurality of RRC message segmentations according to an embodiment of this application;
FIG. 5 is another schematic flowchart of transmitting a plurality of RRC message segmentations according to an embodiment of this application;
FIG. 6 is still another schematic flowchart of transmitting a plurality of RRC message segmentations according to an embodiment of this application;
FIG. 7 is a schematic flowchart of still another information transmission method according to an embodiment of this application;
FIG. 8 is a schematic flowchart of yet another information transmission method according to an embodiment of this application;
FIG. 9 is a diagram of an application architecture of an AI model in NR according to an embodiment of this application;
FIG. 10 is a diagram of a structure of an information transmission apparatus according to an embodiment of this application; and
FIG. 11 is a diagram of a structure of another information transmission apparatus according to an embodiment of this application.

### DESCRIPTION OF EMBODIMENTS

The following describes technical solutions of this application with reference to accompanying drawings.

In embodiments of this application, words such as "first" and "second" are used to distinguish between same items or similar items having basically same functions and roles. For example, a first value and a second value are merely used to distinguish between different values, and a sequence thereof is not limited. A person skilled in the art may understand that the terms such as "first" and "second" do not limit a quantity or an execution sequence, and the terms such as "first" and "second" do not indicate a definite difference.

It should be noted that, in embodiments of this application, the term such as "example" or "for example" is used to represent giving an example, an illustration, or descriptions. Any embodiment or design scheme described as an "example" or "for example" in this application should not be explained as being more preferred or having more advantages than another embodiment or design scheme. Exactly, use of the word "example", "for example", or the like is intended to present a relative concept in a specific manner.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

A terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, some examples of the terminal device include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (PDA), a handheld device with a wireless communication capability, a computing device or another processing device connected to a wireless modem, a vehicle-mounted device, a wearable device, a terminal device in a 5G network, a terminal device in a future evolved public land mobile network (public land mobile network, PLMN), or the like. This is not limited in this application.

By way of example, and not limitation, in this application, the terminal device may be a terminal device in an internet of things (internet of things, IoT) system. The internet of things is an important part of the future information technology development. A main technical feature of the internet of things is to connect things to a network by using a communication technology, to implement an intelligent network for human-machine interconnection and thing-thing interconnection. For example, the terminal device in embodiments of this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly wom on a body or integrated into clothes or accessories of a user. Wearable devices are not only hardware devices, and can implement powerful functions through software support, data exchange, and cloud interaction. In a broad sense, wearable intelligent devices include full-featured and large-sized devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

By way of example, and not limitation, in embodiments of this application, the terminal device may alternatively be a terminal device in machine type communication (machine type communication, MTC). In addition, the terminal device may alternatively be a vehicle-mounted module, a vehicle-mounted module assembly, a vehicle-mounted component, a vehicle-mounted chip, or a vehicle-mounted unit that is built in a vehicle as one or more components or units. The vehicle may use the vehicle-mounted module, the vehicle-mounted module assembly, the vehicle-mounted component, the vehicle-mounted chip, or the vehicle-mounted unit that is built in the vehicle, to implement the method provided in this application. Therefore, embodiments of this application may also be applied to the internet of vehicles, for example, vehicle-to-everything (vehicle-to-everything, V2X), a long term evolution-vehicle (long term evolution-vehicle, LTE-V) technology, or a vehicle-to-vehicle (vehicle-to-vehicle, V2V) technology.

The network device in this application may be a device that communicates with a terminal device. The network device may also be referred to as an access network device or a radio access network device, and may be a transmission reception point (transmission reception point, TRP), or may be an evolved NodeB (evolved NodeB, eNB or eNodeB) in an LTE system, or may be a home base station (for example, a home evolved NodeB, or a home NodeB, HNB), or a baseband unit (baseband unit, BBU), or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN, or the like, or may be an access point (access point, AP) in a WLAN, or may be a gNB in an NR system. Alternatively, the network device may be a metro base station, a micro base station, a pico base station, a femto base station, or the like. This is not limited in this application.

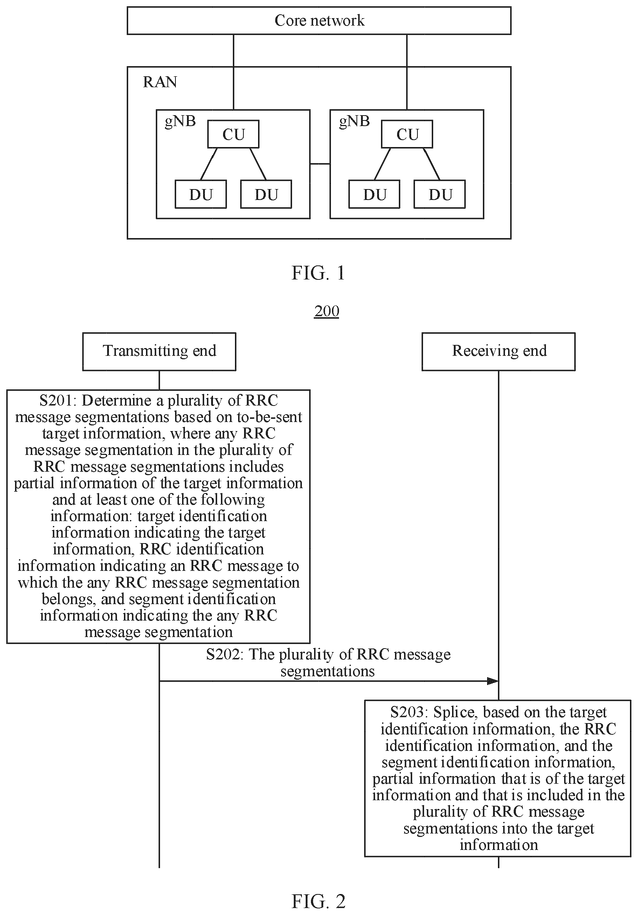

With reference to FIG. 1, the following further describes the network device by using an example in which the network device is a base station (gNB) in a radio access network (radio access network, RAN).

As shown in FIG. 1, the base station may be an architecture in which a central unit (central unit, CU) is separated from a distributed unit (distributed unit, DU). The RAN may be connected to a core network. For example, the core network may be an LTE core network, or may be a 5G core network. The CU and the DU may be functional modules obtained by dividing the base station from a perspective of logical functions. The CU and the DU may be physically separated or deployed together. A plurality of DUs may share one CU. Optionally, one DU may be connected to a plurality of CUs. The CU and the DU may be connected through an interface, and the interface may be an F1 interface or the like. The CU and the DU may be obtained through division based on protocol layers of a wireless network. For example, the CU is configured to perform functions of an RRC layer, a service data adaptation protocol (service data adaptation protocol, SDAP) layer, and a PDCP layer, and the DU is configured to perform functions of a radio link control (radio link control, RLC) layer, a medium access control (medium access control, MAC) layer, and a physical (physical) layer.

It may be understood that division into processing functions of the CU and the DU based on the protocol layers is merely an example, and division may alternatively be performed in another manner. This is not specifically limited in this application. Optionally, the CU or the DU may have more functions of the protocol layers through division. Optionally, the CU or the DU may alternatively have some processing functions of the protocol layers through division. For example, some functions of the RLC layer and functions of a protocol layer above the RLC layer are set on the CU, and remaining functions of the RLC layer and functions of a protocol layer below the RLC layer are set on the DU. Optionally, division into functions of the CU or the DU may alternatively be performed based on service types or other system requirements. For example, division into functions of the CU or the DU may be performed based on latencies. Functions whose processing time needs to meet a latency requirement are set on the DU, and functions whose processing time does not need to meet the latency requirement are set on the CU. Optionally, the CU may also have one or more functions of a core network. One or more CUs may be centrally or separately set. For example, the CUs may be set on a network side for ease of centralized management. The DU may have a plurality of radio frequency functions, or the radio frequency functions may be set remotely.

A function of the CU may be implemented by one entity or different entities. For example, the function of the CU may be further divided, for example, functions of a control plane (control plane, CP) and a user plane (user plane, UP) of the CU are separated, to obtain the control plane of the CU (CU-CP) and the user plane of the CU (CU-UP). The CU-CP and the CU-UP may be implemented by different functional entities, and are connected through an E1 interface. The CU-CP and the CU-UP may be coupled to the DU to jointly complete a function of the base station. Optionally, the CU-CP may be further divided into a CU-CP 1 and a CU-CP 2. The CU-CP 1 includes various radio resource management functions, and the CU-CP 2 includes an RRC function and a PDCP-C function (namely, a basic function of control plane signaling at the PDCP layer).

An AI module may be a module having a machine learning computing capability. In a wireless communication system, the AI module may be located in an operation, administration, and maintenance (operation, administration, and maintenance, OAM) device or entity, a base station (a split architecture is located in the CU), or some UEs, or may be independently a network element entity, for example, an AI control layer (AI control layer, AIC). A main function of the AI module in the wireless communication system is to perform a series of AI computing such as model establishment, training approximation, and reinforcement learning based on input data (in the wireless communication system, the input data is generally network running data provided by a RAN side or monitored by the OAM, for example, a network load and channel quality). A trained model provided by the AI module has a prediction function for a network change on the RAN side, and may be usually used for load prediction, UE track prediction, and the like. In addition, the AI module may further perform policy inference from perspectives of network energy saving, mobility optimization, and the like based on a result of predicting RAN network performance by using the trained model, to obtain a proper and efficient energy saving policy, mobility optimization policy, and the like. When the AI module is located in the OAM, a current northbound interface may be reused for communication between the AI module and the base station on the RAN side. When the AI module is located in the base station or the CU, a current interface such as F1, Xn, or Uu may be reused. When the AI module is an independent network entity, a communication link to the OAM, the RAN side, or the like needs to be reestablished, for example, a wired link or a wireless link. When a CP and a UP of the CU are separated, the CP is usually responsible for receiving of the AI model and functions of subsequent AI inference and policy generation. When the CU-CP is further divided into a CU-CP 1 and a CU-CP 2, the CU-CP 1 is usually responsible for receiving of the model, the function of the subsequent AI inference, and generation of specific interaction signaling, and the CU-CP 2 performs sending

Currently, transmission of target information between an access network device and UE on a control plane is widely applied. A device that sends the target information may be referred to as a transmitting end, and a device that receives the target information may be referred to as a receiving end. When the transmitting end is an access network device, the receiving end may be UE. When the transmitting end is UE, the receiving end may be an access network device. The target information transmitted between the transmitting end and the receiving end may be any data information. In a specific example, the transmitting end is a base station, the receiving end is 100 UEs, and the target information is an artificial intelligence (artificial intelligence, AI) model. The AI model may include an AI-related algorithm. The AI model may be a track prediction model, and the track prediction model may predict a future track of the UE by using a historical track of the UE. A process in which the transmitting end transmits the target message to the receiving end is a process in which the base station transmits the AI model to the 100 UEs.

A manner of transmission between the transmitting end and the receiving end includes control plane-based transmission, user plane-based transmission, non-access stratum (non-access stratum, NAS)-based transmission, and non-3GPP-based private server transmission. Control plane-based transmission between the transmitting end and the receiving end is usually a process in which the transmitting end sends an RRC message to the receiving end.

In a process in which the RRC message is sent by the transmitting end to the receiving end, the RRC message needs to be sent to a PDCP layer through an RRC layer on the transmitting end. After the PDCP layer encapsulates the RRC message into an SDU, the SDU is transmitted to the receiving end through a radio link control (radio link control, RLC) layer, a medium access control (medium access control, MAC) layer, and a physical (physical) layer in sequence. On the receiving end, the RRC message is sent to the RRC layer through the physical layer, the MAC layer, the RLC layer, and the PDCP layer in sequence.

It is stipulated in the 3GPP protocol that a maximum size of an SDU cannot exceed 9 kB. Therefore, when the RRC message exceeds 9 kB, the transmitting end needs to divide the RRC message into a plurality of RRC message segmentations before the RRC message reaches the PDCP layer, where each of the plurality of RRC message segmentations does not exceed 9 kB. The RRC message segmentation may also be referred to as an RRC dedicated message segment (RRC dedicated message segment). The following describes the information transmission method in detail by using the RRC message segmentation as an example. It is further stipulated in the 3GPP protocol that during downlink segmentation transmission, a maximum quantity of segments of the RRC message is 5, and during uplink segmentation transmission, a maximum quantity of segments of the RRC message is 16. In addition, any RRC message segmentation after a 1^{st} RRC message segmentation in the plurality of RRC message segmentations includes only a segment number of the RRC message segmentation. Therefore, the plurality of RRC message segmentations need to be transmitted continuously during transmission, that is, segments of other RRC messages cannot be inserted into the plurality of RRC message segmentations during transmission. For example, a first RRC message is divided into a first RRC message segmentation, a second RRC message segmentation, and a third RRC message segmentation. The second RRC message segmentation includes an identifier indicating that the RRC message segmentation is a second segment in the first RRC message, for example, the identifier may be a 2^{nd} segment; and the third RRC message segmentation includes an identifier indicating that the RRC message segmentation is a third segment in the first RRC message, for example, the identifier may be a 3^{rd} segment. The first RRC message segmentation, the second RRC message segmentation, and the third RRC message segmentation need to be transmitted continuously during transmission, that is, RRC message segmentations of other RRC messages cannot be inserted between the first RRC message segmentation and the second RRC message segmentation, and between the second RRC message segmentation and the third RRC message segmentation.

Therefore, in the existing information transmission method, when transmitting a plurality of RRC message segmentations of any RRC message, even if the transmitting end receives an RRC message with a higher priority, the transmitting end also needs to transmit the RRC message with the higher priority after transmission of the any RRC message is completed. As a result, the current information transmission method affects transmission of another RRC message, causing poor user experience.

In addition, the current 3GPP protocol specifies an RRC message segmentation mechanism, which involves the following RRC messages: an RRC reconfiguration (RRC reconfiguration) message and an RRC resume (RRC resume) message that are sent on an SRB 1 in a downlink transmission process; and an RRC message that is encapsulated with UE capability information (UE capability information) and that is sent on an SRB 1 and an RRC message that is encapsulated with measurement report application layer (measurement report application layer) information and that is sent on an SRB 4 in an uplink transmission process. Therefore, a range of target information sent by using the RRC message segmentation mechanism is small, and user experience is poor.

To resolve the foregoing technical problem, this application provides an information transmission method and apparatus. Each of a plurality of RRC message segmentations used to transmit target information includes: a target identifier indicating the target information and a segment identifier indicating each RRC message segmentation, so that in a process of transmitting the plurality of RRC message segmentations used to transmit the target information, a transmitting end may alternately send another RRC message. In this way, the plurality of RRC segments including the target information include complete information, and therefore even if the another RRC message is alternately sent when the plurality of RRC message segmentations are sent, complete target information and other information can be obtained through splicing at a receiving end. Therefore, support can be provided for alternately sending the another RRC message when the plurality of RRC message segmentations corresponding to the target information are sent. In this way, in some scenarios, impact of transmission of the target information on transmission of the another RRC message can be reduced, and user experience can be improved.

The following describes in detail the information transmission method in this application with reference to FIG. 2 to FIG. 9. The embodiments shown in this application show, from a perspective of device interaction, the information transmission method provided in this application. Specific forms and quantities of the shown devices are merely examples, and should not constitute any limitation on implementation of the method provided in this application. The following describes in detail the information transmission method in embodiments of this application by using an example in which the transmitting end and the receiving end are execution bodies.

It should be understood that the transmitting end is a device that sends target information, and may be an access network device or UE, or may be a chip, a chip system, or a processor that supports the UE or the access network device in implementing the information transmission method, or may be a logical module or software that can implement all or some functions of the UE or the access network device. The receiving end is a device that receives target information from a transmitting end, and may be UE or an access network device, or may be a chip, a chip system, or a processor that supports the UE or the access network device in implementing the information transmission method, or may be a logical module or software that can implement all or some functions of the UE or the access network device. When the transmitting end is an access network device, or a chip, a chip system, or a processor that supports the access network device in implementing the information transmission method, or a logical module or software that can implement all or some functions of the access network device, the receiving end is UE, or a chip, a chip system, or a processor that supports the UE in implementing the information transmission method, or a logical module or software that can implement all or some functions of the UE. When the transmitting end is UE, or a chip, a chip system, or a processor that supports the UE in implementing the information transmission method, or a logical module or software that can implement all or some functions of the UE, the receiving end is an access network device, or a chip, a chip system, or a processor that supports the access network device in implementing the information transmission method, or a logical module or software that can implement all or some functions of the access network device.

FIG. 2 is a schematic flowchart of an information transmission method 200 according to an embodiment of this application. The method 200 includes the following steps.

S201: A transmitting end determines a plurality of RRC message segmentations based on to-be-sent target information, where any RRC message segmentation in the plurality of RRC message segmentations includes partial information of the target information and at least one of the following information: target identification information indicating the target information, RRC identification information indicating an RRC message to which the any RRC message segmentation belongs, and segment identification information indicating the any RRC message segmentation.

It should be understood that, the plurality of RRC message segmentations are RRC message segmentations used to send the target information, and each of the plurality of RRC message segmentations includes the partial information of the target information. For example, the target information is a first AI model, and the plurality of RRC message segmentations include a first RRC message segmentation and a second RRC message segmentation. In this case, the first RRC message segmentation includes a first part in the first AI model, and the second RRC message segmentation includes a second part in the first AI model, where a sum of the first part and the second part is the first AI model. A quantity of RRC message segmentations included in the plurality of RRC message segmentations may be any natural number greater than or equal to 2, for example, 8 or 10. The plurality of RRC message segmentations may belong to different RRC messages. For example, the plurality of RRC message segmentations include a first RRC message segmentation, a second RRC message segmentation, a third RRC message segmentation, a fourth RRC message segmentation, and a fifth RRC message segmentation, where the first RRC message segmentation and the third RRC message segmentation may belong to a first RRC message, and the second RRC message segmentation, the fourth RRC message segmentation, and the fifth RRC message segmentation may belong to a second RRC message. In this embodiment of this application, the plurality of RRC message segmentations may be two or more messages.

The target identification information may be an identifier indicating the target information, for example, may be an ID of the target information or an index of the target information agreed upon by the transmitting end and a receiving end. For example, the target information is a first AI model, the target identification information may be "first", "001", or the like, and "first" and "001" indicate the first AI model. When the plurality of RRC message segmentations received by the receiving end include "first" or "001", the receiving end can determine that the plurality of RRC message segmentations include the first AI model. Alternatively, the target identification information may be an identifier indicating a function of the target information. For example, the target information is a first AI model, a function of the first AI model is channel state information (channel state information, CSI) feedback enhancement, and the target identification information may be information indicating CSI feedback enhancement.

The RRC identification information is information that can indicate an RRC message. For example, the plurality of RRC message segmentations include a first RRC message segmentation, a second RRC message segmentation, and a third RRC message segmentation, where the first RRC message segmentation is an RRC message segmentation in a first RRC message, the second RRC message segmentation is an RRC message segmentation in a second RRC message, and the third RRC message segmentation is an RRC message segmentation in a third RRC message. Correspondingly, the first RRC message segmentation includes information that can indicate the first RRC message, for example, includes "first RRC"; the second RRC message segmentation includes information that can indicate the second RRC message, for example, includes "second RRC"; and the third RRC message segmentation includes information that can indicate the third RRC message, for example, includes "third RRC".

The segment identification information is information that can indicate a sequence of partial information that is of the target information and that is included in the plurality of RRC message segmentations. For example, the target information is a first AI model, and the plurality of RRC message segmentations include a first RRC message segmentation, a second RRC message segmentation, and a third RRC message segmentation. The first RRC message segmentation includes a first part of the first AI model, the second RRC message segmentation includes a second part of the first AI model, and the third RRC message segmentation includes a third part of the first AI model. The first part refers to information about a start part of the first AI model, the second part refers to information about a middle part of the first AI model, and the third part refers to information about an end part of the first AI model. Segment identification information included in the first RRC message segmentation is information that can indicate the first part of the first AI model, for example, the segment identification information is "first segment"; segment identification information included in the second RRC message segmentation is information that can indicate the second part of the first AI model, for example, the segment identification information is "second segment"; and segment identification information included in the third RRC message segmentation is information that can indicate the third part of the first AI model, for example, the segment identification information is "third segment". The receiving end can determine a splicing sequence of the three parts of AI model information based on "first segment", "second segment", and "third segment".

In a specific example, the transmitting end is a gNB, and the receiving end is UE. In a process in which the gNB sends the target information to the UE, a module that generates a plurality of RRC message segmentations including a part of the target information may be located in the gNB or a gNB-CU. At a base station side, a gNB-CP, a gNB-CU-CP, or a gNB-CU-CP 1 generates a plurality of RRC message segmentations including a part of the target information, and the gNB-CP, the gNB-CU-CP, or a gNB-CU-CP 2 sends the plurality of RRC message segmentations to the UE.

S202: The transmitting end sends the plurality of RRC message segmentations to the receiving end. Correspondingly, the receiving end receives the plurality of RRC message segmentations from the transmitting end.

It should be understood that, when the transmitting end sends the plurality of RRC message segmentations to the receiving end, the plurality of RRC message segmentations may be sent in any sequence. For example, the plurality of RRC message segmentations include a first RRC message segmentation, a second RRC message segmentation, and a third RRC message segmentation. During sending, the three RRC message segmentations may be sent in the following sequence: the first RRC message segmentation, the second RRC message segmentation, and the third RRC message segmentation, or may be sent in the following sequence: the first RRC message segmentation, the third RRC message segmentation, and the second RRC message segmentation.

In a possible implementation, the transmitting end alternately sends the plurality of RRC message segmentations to the receiving end based on priorities of RRC messages corresponding to respective RRC identification information of the plurality of RRC message segmentations.

It should be understood that different RRC messages have different priorities, and the transmitting end may first send an RRC message with a higher priority, and then send an RRC message with a lower priority. For example, the plurality of RRC message segmentations include a first RRC message segmentation, a second RRC message segmentation, and a third RRC message segmentation. The first RRC message segmentation belongs to a first RRC message, and the second RRC message segmentation and the third RRC message segmentation belong to a second RRC message. When a priority of the first RRC message is higher than that of the second RRC message, the transmitting end first sends the first RRC message segmentation, and then sends the second RRC message segmentation and the third RRC message segmentation.

Alternately sending means that when the transmitting end sends the plurality of RRC message segmentations, the plurality of RRC message segmentations belong to different RRC messages, and in a process in which the transmitting end sends an RRC message segmentation included in any RRC message, the transmitting end may interleave an RRC message segmentation included in another RRC message. For example, the plurality of RRC message segmentations include a first RRC message segmentation, a second RRC message segmentation, and a third RRC message segmentation. The first RRC message segmentation belongs to a first RRC message; the second RRC message segmentation and the third RRC message segmentation belong to a second RRC message, and a priority of the first RRC message is higher than that of the second RRC message. If the transmitting end receives the first RRC message segmentation after sending the second RRC message segmentation, the transmitting end first sends the first RRC message segmentation, and then sends the third RRC message segmentation.

When the transmitting end sends the plurality of RRC message segmentations, the plurality of RRC message segmentations may be encapsulated with a plurality of pieces of different partial target information. When sending partial target information with a lower priority in the plurality of pieces of partial target information, the transmitting end receives partial target information with a higher priority in the plurality of pieces of target information, and preferentially sends the partial target information with the higher priority. For example, the plurality of RRC message segmentations include a first RRC message segmentation, a second RRC message segmentation, and a third RRC message segmentation, the target information includes a first AI model and a second AI model, the first AI model is encapsulated into the first RRC message segmentation and the second RRC message segmentation, the first RRC message segmentation belongs to a first RRC message, and the second RRC message segmentation belongs to a second RRC message. The second AI model is encapsulated into the third RRC message segmentation, and the third RRC message segmentation belongs to a third RRC message. When the transmitting end receives the third RRC message with a higher priority after sending the first RRC message, the transmitting end preferentially sends the third RRC message, and then sends the second RRC message.

In a possible implementation, in a process in which the transmitting end sends the plurality of RRC message segmentations to the receiving end, if the receiving end needs to perform RRC reconfiguration with the transmitting end, an RRC message segmentation that is not sent in the plurality of RRC message segmentations further includes reconfiguration signaling.

It should be understood that the reconfiguration signaling indicates that RRC reconfiguration occurs between the transmitting end and the receiving end in an information transmission process. In a specific example, the transmitting end is a base station, the receiving end is a UE, and the plurality of RRC message segmentations include a first RRC message segmentation and a second RRC message segmentation. After the base station sends the first RRC message segmentation to the UE, the UE needs to perform RRC reconfiguration with the base station due to a mobility problem, and the second RRC message segmentation sent by the base station to the UE includes reconfiguration signaling.

In a possible implementation, before sending the plurality of RRC message segmentations to the receiving end, the transmitting end selects a receiving end that has no handover possibility and a stable channel condition within preset duration, and sends the plurality of RRC message segmentations to the receiving end that has no handover possibility and the stable channel condition within the preset duration. For example, the transmitting end is a base station, the receiving end is a plurality of UEs, and the target information is an AI model. The base station may select, based on UE measurement and determining on a channel condition, a movement track, and the like of the UE, UE that has no handover possibility and a stable channel condition within preset duration, and then the base station may send the AI model to the UE that has no handover possibility and the stable channel condition within the preset duration.

S203: The receiving end splices, based on the target identification information, the RRC identification information, and the segment identification information, partial information that is of the target information and that is included in the plurality of RRC message segmentations into the target information.

It should be understood that each of the plurality of RRC message segmentations includes the partial information of the target information, that is, the target information is divided into at least one segment of target information, and each segment of target information in the at least one segment of target information is the partial information of the target information. A quantity of the at least one segment of target information is the same as a quantity of the plurality of RRC message segmentations, that is, each of the plurality of RRC message segmentations includes one segment of target information in the at least one segment of target information. A process of splicing the partial information that is of the target information and that is included in the plurality of RRC message segmentations into the target information is a process of splicing at least one segment of target information. In a process of splicing the target information, the receiving end needs to splice at least one segment of target information into the target information in a correct sequence. The splicing sequence may be determined based on segment identification information included in the plurality of RRC segments. In a process of splicing the target information, the receiving end needs to first receive the plurality of RRC message segmentations, and extract partial information of the target information from the plurality of RRC message segmentations. The transmitting end may determine, based on the target identification information, the plurality of RRC segments that include the partial information of the target information. In addition, the transmitting end may determine, based on the RRC identification information, RRC messages to which the plurality of RRC message segmentations respectively belong.

In a specific example, the transmitting end receives a first RRC message segmentation, a second RRC message segmentation, a third RRC message segmentation, and a fourth RRC message segmentation, where target identification information included in the first RRC message segmentation, the third RRC message segmentation, and the fourth RRC message segmentation is a first AI model, and the first RRC message segmentation, the third RRC message segmentation, and the fourth RRC message segmentation are the plurality of RRC message segmentations. The segment identification information included in the first RRC message segmentation, the third RRC message segmentation, and the fourth RRC message segmentation is a first segment, a second segment, and a third segment respectively, and the receiving end splices, based on the first segment, the second segment, and the third segment in a sequence of the first RRC message segmentation, the third RRC message segmentation, and the fourth RRC message segmentation, partial information that is of the first AI model and that is included in the first RRC message segmentation, the third RRC message segmentation, and the fourth RRC message segmentation into the first AI model.

In a possible implementation, in a process of receiving the plurality of RRC message segmentations, the receiving end receives another RRC message with a higher priority. The receiving end first stores a part of the plurality of received RRC message segmentations; after processing the another RRC message with the higher priority, continues to receive a remaining RRC message segmentation other than the part of the RRC message segmentations in the plurality of RRC message segmentations; and after receiving the plurality of RRC message segmentations, splices partial information that is of the target information and that is included in the plurality of RRC message segmentations into the target information.

According to the information transmission method in this application, the plurality of RRC message segmentations including the target information include the target identification information indicating the target information, the RRC identification information indicating the RRC message to which the RRC message segmentation belongs, and the segment identification information indicating the any RRC message segmentation, so that in a process of sending a plurality of RRC segments, even if another RRC message is alternately sent, the receiving end can determine the plurality of RRC message segmentations including the target information. In this way, the plurality of RRC segments including the target information include complete information, and therefore even if the another RRC message is alternately sent when the plurality of RRC message segmentations are sent, complete target information and other information can be obtained through splicing at the receiving end. Therefore, support can be provided for alternately sending the another RRC message when the plurality of RRC message segmentations corresponding to the target information are sent. In this way, in some scenarios, impact of transmission of the target information on transmission of the another RRC message can be reduced, and user experience can be improved.

In an optional embodiment, before step S201, the method 200 further includes: The transmitting end obtains capability information of the receiving end, where the capability information includes information indicating buffer space of the receiving end and information indicating a maximum quantity of RRC segments supported by the receiving end; and the transmitting end determines, based on the capability information, that the receiving end has a capability of receiving the plurality of RRC message segmentations.

It may be understood that the buffer space refers to remaining storage space of the receiving end. For example, when the receiving end is UE, and the remaining storage space of the UE is 500 kB, the buffer space of the UE is 500 kB. The maximum quantity of RRC segments refers to a maximum value of a quantity of RRC message segmentations that can be received by the receiving end. For example, when the receiving end is UE, and the UE can receive a maximum of five RRC message segmentations, the maximum quantity of RRC segments is 5. Different devices have different buffer space and support different maximum segment quantities of received RRC message segmentations. The transmitting end can determine, based on the capability information of the receiving end, whether the receiving end has a capability of receiving the plurality of RRC message segmentations. When the receiving end has a capability of receiving the plurality of RRC message segmentations, the transmitting end sends the plurality of RRC message segmentations to the receiving end. When the receiving end does not have a capability of receiving the plurality of RRC message segmentations encapsulated with the target information, for example, buffer space of the receiving end is less than a data volume of the target information, or a maximum quantity of RRC segments supported by the receiving end is less than a quantity of the plurality of RRC message segmentations, the transmitting end may not send the target information to the receiving end, or the transmitting end may select other target information, determine a plurality of other RRC message segmentations based on the other target information, and send the plurality of other RRC message segmentations to the receiving end. For example, the transmitting end is a base station, the receiving end is UE, and the target information is a first AI model. The base station determines six first RRC message segmentations based on the first AI model. When a maximum quantity of RRC segments supported by the UE is 5, the UE does not have a capability of receiving the six first RRC message segmentations. The base station may change the target information to a second AI model, and may determine four second RRC message segmentations based on the second AI model. Then, the base station sends the four second RRC message segmentations to the UE.

It may be understood that both the foregoing two specific examples are downlink transmission manners. The method in embodiments of this application may also be applied to an uplink transmission manner. This is not specifically limited in this application.

In a possible implementation, the capability information further includes information indicating a maximum quantity of RRC segments of one RRC message supported by the receiving end.

It should be understood that the maximum quantity of RRC segments of one RRC message supported by the receiving end may be a maximum quantity of segments of one RRC message that is received by the receiving end and that can be divided into an RRC message segmentation. For example, if a maximum quantity of RRC segments of one RRC message may be 4, any RRC message received by the receiving end may be divided into a maximum of four segments by the transmitting end. One RRC message in RRC messages that can be received by a different receiving end may have a different maximum quantity of RRC segments. For example, the transmitting end is a base station, the receiving end is UE, and RRC messages that exist on a base station side and that need to be sent to the UE include a first RRC message and a second RRC message. The base station divides the first RRC message into five first RRC message segmentations, and divides the second RRC message into seven second RRC message segmentations. When a maximum quantity of RRC segments of one RRC message in RRC messages that can be received by the UE is 6, the base station sequentially sends the five first RRC message segmentations to the UE, and does not send the seven second RRC message segmentations to the UE.

In a possible implementation, the capability information further includes information indicating a maximum quantity of RRC messages supported by the receiving end.

It should be understood that the maximum quantity of RRC messages may be a quantity of RRC messages. In a specific example, a maximum quantity of RRC messages of the receiving end may be 3, and the receiving end may receive a maximum of three RRC messages. When the three RRC messages are a first RRC message, a second RRC message, and a third RRC message, the first RRC message may include a plurality of first RRC message segmentations, the second RRC message may include a plurality of second RRC message segmentations, and the third RRC message may include a plurality of third RRC message segmentations. In a possible implementation, the capability information further includes information indicating a maximum quantity of RRC segments of one RRC message supported by the receiving end and information indicating a maximum quantity of RRC messages supported by the receiving end.

For example, a maximum quantity of RRC segments of one RRC message may be 4, and any RRC message received by the receiving end may be divided into a maximum of four segments by the transmitting end. A maximum quantity of RRC messages may be 3, and the receiving end may receive a maximum of three RRC messages. In this case, the receiving end may receive a maximum of three RRC messages, and a quantity of a plurality of RRC message segmentations corresponding to any one of the three RRC messages is less than or equal to 4.

In an optional embodiment, the plurality of RRC message segmentations are sent based on a first-type signaling radio bearer SRB and/or a second-type SRB, a maximum quantity of segments supported by the second-type SRB is greater than a maximum quantity of segments of the first-type SRB, and a transmission priority of the second-type SRB is lower than a transmission priority of the first-type SRB.

It should be understood that the RRC message is carried on a signaling radio bearer (signaling radio bearer, SRB) and transmitted by the transmitting end to the receiving end. The first-type SRB may be five SRBs specified in the 3GPP protocol: SRB 0, SRB 1, SRB 2, SRB 3, and SRB 4. The SRB 0 may be used for a logical channel group of a common control channel (common control channel, CCCH) for information transmission between UE and an access network device that have not established an RRC connection. The SRB 1 may be used to transmit RRC and NAS messages, and may use a logical channel group of a dedicated control channel (dedicated control channel, DCCH). The SRB 2 may be used to transmit a NAS message and an RRC message that include measurement result information, or may use a logical channel group of a DCCH. However, a scheduling priority of the SRB 2 is lower than a scheduling priority of the SRB 1, and the SRB 2 can be established only after security authentication is activated. The SRB 3 may be applied to UE in a dual connectivity (dual connectivity, DC) state, and may be used to transmit an RRC message through a logical channel group of a DCCH. The SRB 4 may be used to transmit an RRC message including application layer measurement result information, and may use a logical channel group of a DCCH. In addition, the SRB 4 can be established only after security authentication is activated.

The second-type SRB may be a newly established SRB different from the SRB, that is, the SRB 0, the SRB 1, the SRB 2, the SRB 3, and the SRB 4, for example, may be an SRB 5. A priority of the second-type SRB is lower than priorities of the SRB 0, the SRB 1, the SRB 2, the SRB 3, and the SRB 4. When sending an RRC message on different SRBs, the transmitting end may preferentially send an RRC message corresponding to an SRB with a higher priority. For example, the SRB 5 is the second-type SRB. When the transmitting end needs to send a first RRC message on the SRB 2, and needs to send a second RRC message on the SRB 5, the transmitting end first sends the first RRC message on the SRB 2, and then sends the second RRC message on the SRB 5.

It is stipulated in the 3GPP protocol that on the SRB 0, the SRB 1, the SRB 2, the SRB 3, and the SRB 4, a maximum quantity of segments of an RRC message sent in a downlink is 5, and a maximum quantity of segments of an RRC message sent in an uplink is 16. For the second-type SRB, the specification of the 3GPP protocol may be broken, that is, on the second-type SRB, a maximum quantity of segments of an RRC message sent in a downlink may exceed 5, and a maximum quantity of segments of an RRC message sent in an uplink may exceed 16. In this way, even if a data volume of the target information is large, in a process of sending the target information on the second-type SRB, an RRC message including the target information is divided into a plurality of RRC message segmentations, and the plurality of RRC message segmentations may be sequentially sent on the second-type SRB. In addition, because a priority of the second-type SRB is lower than that of the first-type SRB, transmission of another RRC message is not affected when the target information is transmitted on the second-type SRB.

In an optional embodiment, when the plurality of RRC message segmentations are sent based on the second-type SRB, if no other RRC message needs to be delivered on the second-type SRB, and an air interface load of the transmitting end meets a preset low load condition, an RRC message segmentation with a large data volume that is included in the plurality of RRC message segmentations is preferentially sent; or if another RRC message needs to be delivered on the second-type SRB, and/or an air interface load of the transmitting end does not meet a preset low load condition, an RRC message segmentation with a small data volume that is included in the plurality of RRC message segmentations is preferentially sent.

It should be understood that the preset low load condition is a preset condition, and may be that a data volume of a to-be-sent RRC message is less than or equal to a first preset threshold, where the first preset threshold is any value greater than 0, for example, may be 5 MB. Alternatively, the preset low load condition may be that a quantity of to-be-sent RRC message segmentations is less than or equal to a second preset threshold, where the second preset threshold is any positive integer, for example, may be 10. The RRC message segmentation with a large data volume is an RRC message segmentation with a larger data volume in RRC message segmentations included in the plurality of RRC message segmentations.

For example, the plurality of RRC message segmentations include a first RRC message segmentation, a second RRC message segmentation, and a third RRC message segmentation, and data volumes of the first RRC message segmentation, the second RRC message segmentation, and the third RRC message segmentation are respectively 6 kB, 8 kB, and 5 kB, where the first RRC message segmentation is an RRC message segmentation with a large data amount, and the third RRC message segmentation is an RRC message segmentation with a small data amount. When no other RRC message needs to be delivered on the second-type SRB, and an air interface load of the transmitting end meets a preset low load condition, the transmitting end may preferentially send the second RRC message segmentation. When another RRC message needs to be delivered on the second-type SRB, and an air interface load of the transmitting end does not meet a preset low load condition, the transmitting end may first send the third RRC message segmentation. When another RRC message needs to be delivered on the second-type SRB, and an air interface load of the transmitting end meets a preset low load condition, the transmitting end may first send the third RRC message segmentation. When no other RRC message needs to be delivered on the second-type SRB, and an air interface load of the transmitting end does not meet a preset low load condition, the transmitting end may first send the third RRC message segmentation.

In an optional embodiment, in a process in which the transmitting end sends the plurality of RRC message segmentations to the receiving end, if an RRC message with a higher priority than the plurality of RRC message segmentations is received, the transmitting end preferentially sends the RRC message with the higher priority than the plurality of RRC message segmentations.

It should be understood that the RRC message with the higher priority than the plurality of RRC message segmentations may not include the target information, that is, the RRC message with the higher priority than the plurality of RRC message segmentations is signaling used to transmit information other than the target information. For example, the plurality of RRC message segmentations include a first RRC message segmentation, a second RRC message segmentation, and a third RRC message segmentation. After sending the first RRC message segmentation, the transmitting end receives a first RRC message with a higher priority than the plurality of RRC message segmentations, and then the transmitting end preferentially sends the first RRC message, and after sending the first RRC message, the transmitting end continues to send the second RRC message segmentation and the third RRC message segmentation.

The RRC message or the RRC message segmentation with the higher priority than the plurality of RRC message segmentations may alternatively include the target information. For example, the target information includes a first part of target information and a second part of target information, the first part of target information is encapsulated into the plurality of RRC message segmentations, and the second part of target information is encapsulated into the RRC message segmentation with the higher priority than the plurality of RRC message segmentations. In this case, in a process of transmitting the plurality of RRC message segmentations, the transmitting end receives the RRC message segmentation with the higher priority than the plurality of RRC message segmentations. In this case, the transmitting end preferentially sends the RRC message segmentation with the higher priority than the plurality of RRC message segmentations.

In a specific example, the target information includes a first AI model and a second AI model, the plurality of RRC message segmentations include a first RRC message segmentation, a second RRC message segmentation, and a third RRC message segmentation, the first RRC message segmentation and the second RRC message segmentation belong to a first RRC message, the third RRC message segmentation belongs to a third RRC message, the first AI model is encapsulated into the first RRC message segmentation and the second RRC message segmentation, and the second AI model is encapsulated into the third RRC message segmentation. After the transmitting end sends either of the first RRC message segmentation and the second RRC message segmentation, when the transmitting end receives the third RRC message with a higher priority than the first RRC message, the transmitting end preferentially sends the third RRC message segmentation corresponding to the third RRC message, and then sends the remaining one of the first RRC message segmentation and the second RRC message segmentation.

It should be understood that a plurality of RRC message segmentations corresponding to one RRC message may be transmitted in any sequence. For example, the target information is a first AI model, the first AI model is encapsulated into a first RRC message, and the first RRC message includes a first RRC message segmentation, a second RRC message segmentation, and a third RRC message segmentation. When sending the first RRC message segmentation, the second RRC message segmentation, and the third RRC message segmentation, the transmitting end may first send the first RRC message segmentation, or may first send the second RRC message segmentation, that is, the transmitting end may send the three RRC message segmentations in any sequence. Optionally, the transmitting end may sequentially transmit the plurality of RRC message segmentations based on priorities of a plurality of RRC message segmentations corresponding to one RRC message. For example, the target information is a first AI model, the first AI model is encapsulated into a first RRC message, the first RRC message includes a first RRC message segmentation, a second RRC message segmentation, and a third RRC message segmentation, and a sequence of priorities of the three RRC message segmentations is the first RRC message segmentation, the second RRC message segmentation, and the third RRC message segmentation in descending order. Therefore, the transmitting end sequentially transmits the three RRC message segmentations in a sequence of the first RRC message segmentation, the second RRC message segmentation, and the third RRC message segmentation. In a possible implementation, priorities of the plurality of RRC message segmentations may be determined based on segment identification information of the plurality of RRC message segmentations. For example, the plurality of RRC message segmentations include a first RRC message segmentation, a second RRC message segmentation, and a third RRC message segmentation, and segment identification information of the first RRC message segmentation, the second RRC message segmentation, and the third RRC message segmentation is respectively 1, 2, and 3. In this case, a sequence of the priorities of the plurality of RRC message segmentations may be the first RRC message segmentation, the second RRC message segmentation, and the third RRC message segmentation in descending order.

In an optional embodiment, the any RRC message segmentation further includes identification information, and the identification information indicates whether partial target information in the any RRC message segmentation is a last part of the target information.

Each of the plurality of RRC message segmentations includes identification information, and the identification information may be "a last segment" or "a non-last segment". In this way, after receiving the plurality of RRC message segmentations, the receiving end obtains partial information of a plurality of pieces of target information, and can determine, based on the identification information, whether the partial information of the target information is a last part of the target information, thereby helping improve efficiency of splicing the target information by the receiving end.

In an optional embodiment, the target identification information indicating the target information, the RRC identification information indicating the RRC message to which the any RRC message segmentation belongs, the segment identification information indicating the any RRC message segmentation, and the identification information are all information elements of the any RRC message segmentation.

It should be understood that the target identification information, the RRC identification information, and the segment identification information may be encapsulated into a container (container) of the RRC message segmentation, or may be encapsulated outside a container of the RRC message segmentation. When the target identification information, the RRC identification information, and the segment identification information are encapsulated outside the container of the RRC message segmentation, the target identification information, the RRC identification information, and the segment identification information are information elements of the RRC message segmentation.

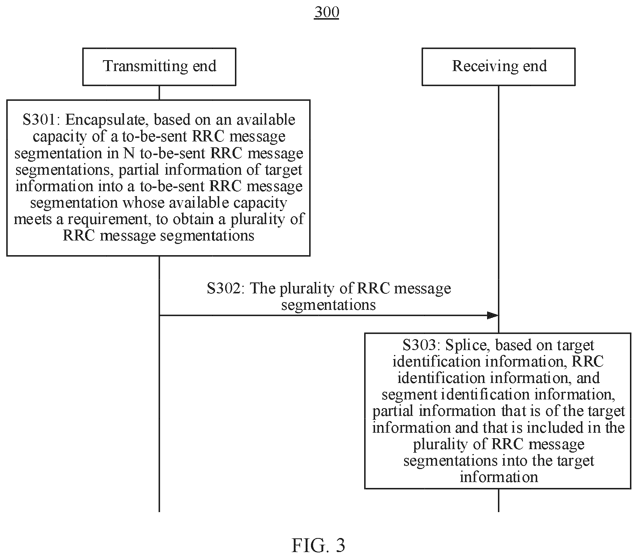

The following describes in detail an information transmission method in embodiments of this application with reference to FIG. 3.

FIG. 3 is a schematic flowchart of an information transmission method 300 according to an embodiment of this application. The method 300 is applied to a system including a transmitting end and a receiving end. The transmitting end includes N to-be-sent RRC messages, and N is a positive integer. The method 300 includes the following steps.

S301: A transmitting end encapsulates, based on an available capacity of a to-be-sent RRC message segmentation in N to-be-sent RRC messages, partial information of target information into a to-be-sent RRC message segmentation whose available capacity meets a requirement, to obtain a plurality of RRC message segmentations, where any RRC message segmentation in the plurality of RRC message segmentations includes the partial information of the target information and at least one of the following information: target identification information indicating the target information, RRC identification information indicating an RRC message to which the any RRC message segmentation belongs, and segment identification information indicating the any RRC message segmentation.

It should be understood that the to-be-sent RRC message is all RRC messages that need to be sent by the transmitting end, and the to-be-sent RRC message segmentation is obtained when the transmitting end divides the to-be-sent RRC message. An RRC message segmentation in which the partial information of the target information is encapsulated in to-be-sent RRC message segmentations belongs to the plurality of RRC message segmentations. A quantity of to-be-sent RRC message segmentations is greater than or equal to a quantity of the plurality of RRC message segmentations. For example, the plurality of RRC message segmentations include a first RRC message segmentation and a second RRC message segmentation, and the to-be-sent RRC message segmentations include a first RRC message segmentation, a second RRC message segmentation, and a third RRC message segmentation, where the first RRC message segmentation and the second RRC message segmentation each include the partial information of the target information, and the third RRC message segmentation does not include the target information. The available capacity may be a difference between a data volume of the to-be-sent RRC message segmentation and a maximum data volume of the RRC message segmentation. For example, it is stipulated in the 3GPP protocol that a size of an SDU does not exceed 9 kB, and therefore a maximum data volume of an RRC message segmentation may be 9 kB. The to-be-sent RRC message segmentations include a first RRC message segmentation, a second RRC message segmentation, and a third RRC message segmentation, and data volumes of the first RRC message segmentation, the second RRC message segmentation, and the third RRC message segmentation are respectively 5 kB, 6 kB, and 9 kB. In this case, available capacities of the first RRC message segmentation, the second RRC message segmentation, and the third RRC message segmentation are respectively 4 kB, 3 kB, and 0 kB. In this case, the transmitting end may divide the target information into a first part of information whose data amount is 4 kB and a second part of information whose data amount is 3 kB, encapsulate the first part of information into the first RRC message segmentation, and encapsulate the second part of information into the second RRC message segmentation. In this way, the plurality of RRC message segmentations may be obtained.

S302: The transmitting end sends the plurality of RRC message segmentations to a receiving end. Correspondingly, the receiving end receives the plurality of RRC message segmentations from the transmitting end.

It should be understood that an implementation of S302 is similar to an implementation of S202. Details are not described herein again.

S303: The receiving end splices, based on the target identification information, the RRC identification information, and the segment identification information, partial information that is of the target information and that is included in the plurality of RRC message segmentations into the target information.

It should be understood that an implementation of S303 is similar to an implementation of S203. Details are not described herein again.

In an optional embodiment, the transmitting end includes an RRC layer and a target information transport layer, and S301 may be specifically implemented in any one of the following three manners.

It should be understood that both the RRC layer and the target information transport layer belong to the transmitting end. The target information transport layer is a functional module that can implement S301, and may be a newly established independent layer, or may be some functions of another layer (an RRC layer, a PDCP layer, an RLC layer, or the like at the transmitting end). This is not specifically limited in this application.

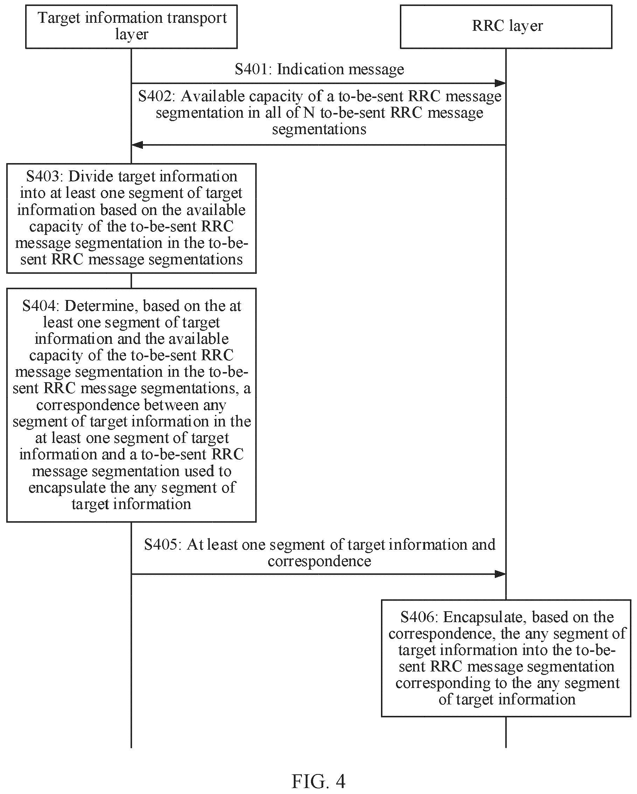

Manner 1 is described in detail below with reference to FIG. 4.

Manner 1: S401: The target information transport layer sends an indication message to the RRC layer, where the indication message indicates the RRC layer to send an available capacity of a to-be-sent RRC message segmentation in each of the N to-be-sent RRC messages to the target information transport layer. Correspondingly, the RRC layer receives the indication message from the target information transport layer.

It should be understood that the available capacity of the to-be-sent RRC message segmentation in each of the N to-be-sent RRC messages may refer to a size of a container capacity that can be added to an SDU corresponding to the to-be-sent RRC message segmentation included in the N to-be-sent RRC messages. It is stipulated in the 3GPP specifications that a size of an SDU cannot exceed 9 kB. Therefore, there is an available capacity for to-be-sent RRC message segmentations whose data volumes are less than 9 kB.

S402: The RRC layer sends, based on the indication message, the available capacity of the to-be-sent RRC message segmentation in each of the N to-be-sent RRC messages to the target information transport layer. Correspondingly, the target information transport layer receives the available capacity of the to-be-sent RRC message segmentation in each of the N to-be-sent RRC messages from the RRC layer.

In a possible implementation, the available capacity of the to-be-sent RRC message segmentation in each of the N to-be-sent RRC messages may be sent to the target information transport layer in a form of a table. For example, it is assumed that the to-be-sent RRC message segmentations include two to-be-sent RRC message segmentations, where an SRB corresponding to a first to-be-sent RRC message segmentation is an SRB 1, a corresponding SDU number is 1, and an available capacity is 4 kB; and an SRB corresponding to a second to-be-sent RRC message segmentation is an SRB 5, a corresponding SDU number is 2, and an available capacity is 5 kB. The SRB 5 is a second-type SRB, that is, an SRB newly established by the transmitting end. Available capacities of the two to-be-sent RRC message segmentations sent by the RRC layer to the target information transport layer may be sent in a form shown in Table 1.

**Table 1 Sending manner of available capacities of two to-be-sent RRC message segmentations**

| SDU number | SRB number | Available capacity |
|---|---|---|
| 1 | SRB 1 | 4 kB |
| 2 | SRB 5 | 5 kB |

S403: The target information transport layer divides the target information into at least one segment of target information based on the available capacity of the to-be-sent RRC message segmentation in each of the N to-be-sent RRC messages from the RRC layer.

It should be understood that a quantity of the at least one segment of target information is any positive integer. When a sum of available capacities of to-be-sent RRC message segmentations in each of the N to-be-sent RRC messages is greater than or equal to a data volume of the target information, the target information transport layer may divide the target information based on an available capacity of each to-be-sent RRC message segmentation, where a data volume of any segment of target information in the at least one segment of target information is less than or equal to an available capacity that is of a to-be-sent RRC message segmentation and that corresponds to the any segment of target information. The available capacity that is of the to-be-sent RRC message segmentation and that corresponds to the any segment of target information is an available capacity that is of a to-be-sent RRC message segmentation and that is referenced when the target information transport layer divides the any segment of target information. For example, to-be-sent RRC message segmentations in each of the N to-be-sent RRC messages includes a first to-be-sent RRC message segmentation, a second to-be-sent RRC message segmentation, a third to-be-sent RRC message segmentation, and a fourth to-be-sent RRC message segmentation, and available capacities of the first to-be-sent RRC message segmentation, the second to-be-sent RRC message segmentation, the third to-be-sent RRC message segmentation, and the fourth to-be-sent RRC message segmentation are respectively 4 kB, 3 kB, 5 kB, and 6 kB. The target information is a first AI model. If a data volume of the first AI model is 18 kB, the target information transport layer may divide the first AI model into four segments of target information: a first segment of target information, a second segment of target information, a third segment of target information, and a fourth segment of target information. Data volumes of the four segments of target information are respectively 4 kB, 3 kB, 5 kB, and 6 kB. If the data volume of the first AI model is 15 kB, the target information transport layer may divide the first AI model into four segments of target information respectively based on available capacities of the first to-be-sent RRC message segmentation, the second to-be-sent RRC message segmentation, the third to-be-sent RRC message segmentation, and the fourth to-be-sent RRC message segmentation: a first segment of target information, a second segment of target information, a third segment of target information, and a fourth segment of target information, where data volumes of the four segments of target information are respectively 4 kB, 3 kB, 5 kB, and 3 kB, and a data volume of the fourth segment of target information is less than an available capacity of the fourth to-be-sent RRC message segmentation. If the data volume of the first AI model is 15 kB, the target information transport layer may further divide the first AI model into three segments of target information respectively based on available capacities of the first to-be-sent RRC message segmentation, the third to-be-sent RRC message segmentation, and the fourth to-be-sent RRC message segmentation: a first segment of target information, a second segment of target information, and a third segment of target information, where data volumes of the three segments of target information are respectively 4 kB, 5 kB, and 6 kB, the first segment of target information is obtained through division based on an available capacity of the first to-be-sent RRC message segmentation, the second segment of target information is obtained through division based on an available capacity of the third to-be-sent RRC message segmentation, and the third segment of target information is obtained through division based on an available capacity of the fourth to-be-sent RRC message segmentation.

When a sum of available capacities of to-be-sent RRC message segmentations in each of the N to-be-sent RRC messages is less than a data volume of the target information, the target information transport layer may divide the target information based on an available capacity of each to-be-sent RRC message segmentation, and may divide a remaining part into at least one segment of remaining target information whose data volume is a maximum data volume of an SDU specified in the 3GPP protocol. For example, to-be-sent RRC message segmentations in each of the N to-be-sent RRC messages includes a first to-be-sent RRC message segmentation, a second to-be-sent RRC message segmentation, a third to-be-sent RRC message segmentation, and a fourth to-be-sent RRC message segmentation, and available capacities of the first to-be-sent RRC message segmentation, the second to-be-sent RRC message segmentation, the third to-be-sent RRC message segmentation, and the fourth to-be-sent RRC message segmentation are respectively 4 kB, 3 kB, 5 kB, and 6 kB. The target information is a first AI model. If a data volume of the first AI model is 30 kB, the target information transport layer may first divide the first AI model into four segments of target information: a first segment of target information, a second segment of target information, a third segment of target information, and a fourth segment of target information. Data volumes of the four segments of target information are respectively 4 kB, 3 kB, 5 kB, and 6 kB. In this case, a remaining part whose data volume is 12 kB in the first AI model is not divided. In this case, the remaining part may be divided based on a maximum data volume of an SDU specified in the 3GPP protocol. When the maximum data volume of the SDU specified in the 3GPP protocol is 9 kB, the target information transport layer may divide the remaining part into two segments of AI target information: a fifth segment of target information and a sixth segment of target information. Data volumes of the two segments of target information may be respectively 9 kB and 3 kB, or may be respectively 6 kB and 6 kB, provided that at least the data volumes of the two segments of target information are less than or equal to 9 kB.

S404: The target information transport layer determines, based on the at least one segment of target information and the available capacity of the to-be-sent RRC message segmentation in each of the N to-be-sent RRC messages, a correspondence between any segment of target information in the at least one segment of target information and a to-be-sent RRC message segmentation used to encapsulate the any segment of target information.

It should be understood that the correspondence indicates a correspondence between any segment of target information in the at least one segment of target information at the RRC layer and a to-be-sent RRC message segmentation that is to be encapsulated into the any segment of target information. For example, the to-be-sent RRC message segmentations in each of the N to-be-sent RRC messages include a first to-be-sent RRC message segmentation and a second to-be-sent RRC message segmentation, and available capacities of the first to-be-sent RRC message segmentation and the second to-be-sent RRC message segmentation are respectively 4 kB and 6 kB. The target information is a first AI model, and a data volume of the first AI model is 9 kB. In this case, the target information transport layer may first divide the first AI model into two segments of target information: a first segment of target information and a second segment of target information. Data volumes of the two segments of target information are respectively 4 kB and 5 kB. For the correspondence, the first segment of target information corresponds to the first to-be-sent RRC message segmentation, and the second segment of target information corresponds to the second to-be-sent RRC message segmentation.

S405: The target information transport layer sends the at least one segment of target information and the correspondence to the RRC layer. Correspondingly, the RRC layer receives the at least one segment of target information and the correspondence from the target information transport layer.

Optionally, the target information transport layer further sends, to the RRC layer, at least one of target identification information, RRC identification information, and segment identification information that correspond to each segment of target information in the at least one segment of target information.

Optionally, the target information transport layer further sends, to the RRC layer, identification information corresponding to each segment of target information in the at least one segment of target information, where the identification information indicates whether each segment of target information in the at least one segment of target information is a last segment of the target information.

S406: The RRC layer encapsulates, based on the correspondence, the any segment of target information into the to-be-sent RRC message segmentation corresponding to the any segment of target information.

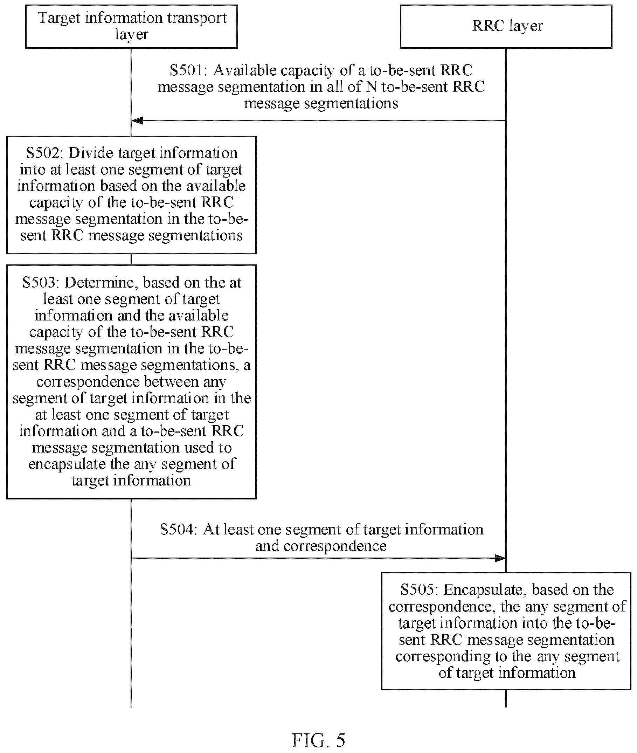

Manner 2 is described in detail below with reference to FIG. 5.

Manner 2: S501: The RRC layer sends an available capacity of a to-be-sent RRC message segmentation in each of the N to-be-sent RRC messages to the target information transport layer. Correspondingly, the target information transport layer receives the available capacity of the to-be-sent RRC message segmentation in each of the N to-be-sent RRC messages from the RRC layer.

In a possible implementation, the RRC layer periodically sends the available capacity of the to-be-sent RRC message segmentation in each of the N to-be-sent RRC messages to the target information transport layer. For example, the RRC layer periodically sends the available capacity of the to-be-sent RRC message segmentation in each of the N to-be-sent RRC messages to the target information transport layer once every hour.

In another possible implementation, when the available capacity of the to-be-sent RRC message segmentation in the N to-be-sent RRC messages meets a preset condition, the RRC layer periodically sends the available capacity of the to-be-sent RRC message segmentation in each of the N to-be-sent RRC messages to the target information transport layer. The preset condition may be that the available capacity of the to-be-sent RRC message segmentation is greater than or equal to a preset available capacity, for example, the preset available capacity is 3 kB. In this case, when an available capacity of any segment of to-be-sent RRC message segmentation is greater than or equal to 3 kB, the RRC layer periodically sends the available capacity of the to-be-sent RRC message segmentation in each of the N to-be-sent RRC messages to the target information transport layer. The preset condition may also be that an available capacity of a preset quantity of to-be-sent RRC message segmentations is greater than or equal to a preset available capacity, for example, the preset available capacity is 3 kB, and the preset quantity is 2. In this case, when available capacities of at least two to-be-sent RRC message segmentations are greater than or equal to 3 kB, the RRC layer sends the available capacity of the to-be-sent RRC message segmentation in each of the N to-be-sent RRC messages to the target information transport layer.

S502: The target information transport layer divides the target information into at least one segment of target information based on the available capacity of the to-be-sent RRC message segmentation in each of the N to-be-sent RRC messages from the RRC layer.

S503: The target information transport layer determines, based on the at least one segment of target information and the available capacity of the to-be-sent RRC message segmentation in each of the N to-be-sent RRC messages, a correspondence between any segment of target information in the at least one segment of target information and a to-be-sent RRC message segmentation used to encapsulate the any segment of target information.

S504: The target information transport layer sends the at least one segment of target information and the correspondence to the RRC layer. Correspondingly, the RRC layer receives the at least one segment of target information and the correspondence from the target information transport layer.

Optionally, the target information transport layer further sends, to the RRC layer, a bearer correspondence between any segment of target information in the at least one segment of target information and an SRB used to send the any segment of target information. For example, the at least one segment of target information includes a first segment of target information and a second segment of target information. The target information transport layer further sends, to the RRC layer, the first segment of target information corresponding to an SRB 1 and the first segment of target information corresponding to an SRB 2. The bearer correspondence indicates that an RRC message segmentation including the first segment of target information is sent on the SRB 1, and an RRC message segmentation including the second segment of target information is sent on the SRB 2.

S505: The RRC layer encapsulates, based on the correspondence, the any segment of target information into the to-be-sent RRC message segmentation corresponding to the any segment of target information.

It should be understood that S502 to S505 are respectively similar to S403 to S406. For details, refer to the foregoing descriptions. The details are not described herein again.

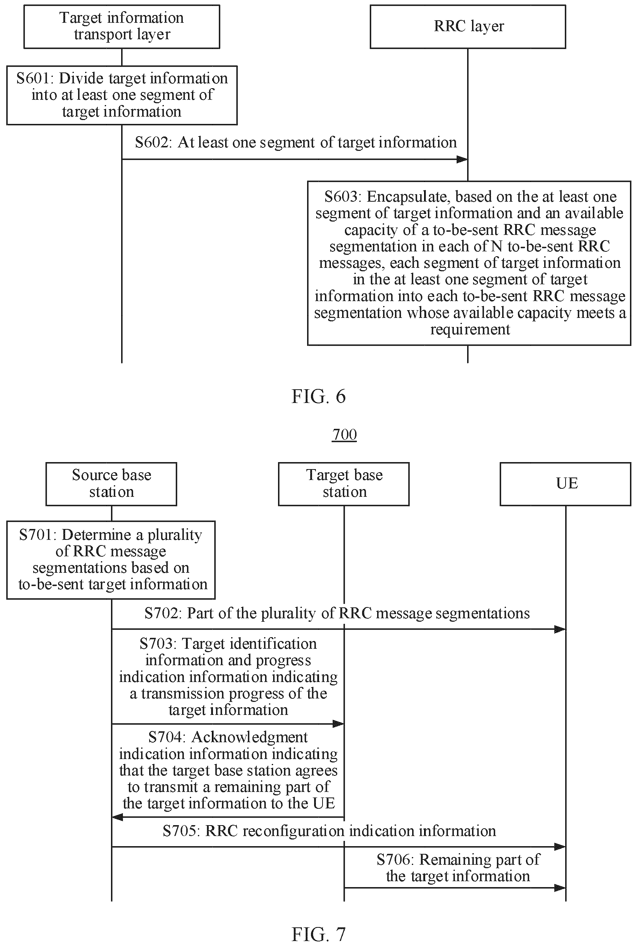

Manner 2 is described in detail below with reference to FIG. 6.

Manner 3: S601: The target information transport layer divides the target information into at least one segment of target information.

S602: The target information transport layer sends the at least one segment of target information to the RRC layer. Correspondingly, the RRC layer receives the at least one segment of target information from the target information transport layer.

Optionally, the target information transport layer sends, to the RRC layer, target identification information corresponding to any segment of target information in the at least one segment of target information, segment identification information, a data amount of the any segment of target information, identification information, partial information of target information included in the any segment of target information, and an SRB that is expected to be transmitted. For example, the target information is a first AI model, the at least one segment of target information includes a first segment of target information and a second segment of target information, and the target information transport layer may send the at least one segment of target information to the RRC layer in a manner shown in Table 2.

**Table 2 Manner of sending at least one segment of target information**

| Target identification information | Segment identification information | Data volume | Identification information | Partial information of target information | SRB expected to be transmitted |
|---|---|---|---|---|---|
| First AI model | First segment | 3 kB | Non-last segment | First part of the first AI Model | SRB 1 |
| First AI model | Second segment | 4 kB | Last segment | Second part of the first AI Model | SRB 2 |

S603: The RRC layer encapsulates, based on the at least one segment of target information and the available capacity of the to-be-sent RRC message segmentation in each of the N to-be-sent RRC messages, each segment of target information in the at least one segment of target information into each to-be-sent RRC message segmentation whose available capacity meets a requirement.

In a possible implementation, after the transmitting end sends the plurality of RRC message segmentations to the receiving end, the method 300 further includes: The RRC layer sends a completion indication message to the target information transport layer, where the completion indication message indicates that transmission of the target information is completed.

It should be understood that, after the RRC layer completes transmission of the plurality of RRC message segmentations, the RRC layer sends the completion indication message to the target information transport layer. In this way, the target information transport layer may process a remaining task. For example, when the target information is a first AI model, the remaining task may be transmitting a second AI model. In this way, after completing transmission of the plurality of RRC message segmentations encapsulated with the first AI model, the RRC layer sends the completion indication message to the target information transport layer, so that the target information transport layer can continue to process the second AI model.

Optionally, that the transmitting end sends the plurality of RRC message segmentations to the receiving end includes: After the transmitting end sends any RRC message segmentation in the plurality of RRC message segmentations to the receiving end, the RRC layer sends a segmentation complete indication message to the target information transport layer, where the segmentation complete indication message indicates that transmission of the any RRC message segmentation is completed.

For example, the plurality of RRC message segmentations include a first RRC message segmentation and a second RRC message segmentation. After the transmitting end successfully sends the first RRC message segmentation to the receiving end, the RRC layer sends a first segmentation complete indication message to the target information transport layer, where the first segmentation complete indication message indicates that transmission of the first RRC message segmentation is completed. After the transmitting end successfully sends the second RRC message segmentation to the receiving end, the RRC layer sends a second segmentation complete indication message to the target information transport layer, where the second segmentation complete indication message indicates that transmission of the second RRC message segmentation is completed.

Optionally, that the transmitting end sends the plurality of RRC message segmentations to the receiving end includes: After the transmitting end sends any RRC message segmentation in the plurality of RRC message segmentations to the receiving end, the RRC layer sends a segmentation complete indication message to the target information transport layer, where the segmentation complete indication message indicates that transmission of the any RRC message segmentation is completed; and the RRC layer sends a completion indication message to the target information transport layer, where the completion indication message indicates that transmission of the target information is completed.

For example, the target information is a first AI model, and the plurality of RRC message segmentations include a first RRC message segmentation and a second RRC message segmentation. After the transmitting end successfully sends the first RRC message segmentation to the receiving end, the RRC layer sends a first segmentation complete indication message to the target information transport layer, where the first segmentation complete indication message indicates that transmission of the first RRC message segmentation is completed. After the transmitting end successfully sends the second RRC message segmentation to the receiving end, the RRC layer sends a second segmentation complete indication message to the target information transport layer, where the second segmentation complete indication message indicates that transmission of the second RRC message segmentation is completed. Then, the RRC layer sends a completion indication message to the target information transport layer, where the completion indication message indicates that transmission of the first AI model is completed.

In an optional embodiment, the receiving end includes an RRC layer and a target information receiving layer, and that the receiving end receives the plurality of RRC message segmentations from the transmitting end in S302 may be specifically implemented in the following manner:

The RRC layer receives the plurality of RRC message segmentations from the transmitting end; the RRC layer decodes the plurality of RRC message segmentations to obtain a plurality of message segmentations, where any message segmentation in the plurality of message segmentations includes partial information of target information and at least one of the following information: target identification information indicating the target information, RRC identification information indicating an RRC message to which the any message segmentation belongs, and segment identification information indicating the any message segmentation; the RRC layer sends the plurality of message segmentations to a target information receiving layer; and the target information receiving layer receives the plurality of message segmentations from the RRC layer.

It should be understood that both the RRC layer and the target information receiving layer belong to the receiving end. The target information receiving layer is a functional module that can implement S302, and may be a newly established independent layer, or may be some functions of another layer (an RRC layer, a PDCP layer, an RLC layer, or the like at the receiving end). This is not specifically limited in this application.

The plurality of RRC message segmentations are in one-to-one correspondence with the plurality of message segmentations. For example, the plurality of RRC message segmentations include a first RRC message segmentation and a second RRC message segmentation. The RRC layer decodes the first RRC message segmentation to obtain a first message segmentation corresponding to the first RRC message segmentation; and the RRC layer decodes the second RRC message segmentation to obtain a second message segmentation corresponding to the second RRC message segmentation, where the first message segmentation includes partial information of the target information and at least one of target identification information, RRC identification information, and segment identification information that correspond to the first RRC message segmentation, and the second message segmentation includes partial information of the target information and at least one of target identification information, RRC identification information, and segment identification information that correspond to the second RRC message segmentation.

A person skilled in the art may understand that, when at least one of the target identification information, the RRC identification information, and the segment identification information is encapsulated in a container of an RRC message segmentation, after the RRC layer decodes any RRC message segmentation, any obtained message segmentation includes at least one of the target identification information, the RRC identification information, and the segment identification information. In this case, after the RRC layer sends the plurality of message segmentations to the target information receiving layer, the target information receiving layer can determine, based on the plurality of message segmentations, at least one of target identification information, RRC identification information, and segment identification information that correspond to each message segmentation in the plurality of message segmentations.

In an optional embodiment, the receiving end includes an RRC layer and a target information receiving layer; and the target identification information indicating the target information, the RRC identification information indicating the RRC message to which the any RRC message segmentation belongs, the segment identification information indicating the any RRC message segmentation, and the identification information are information elements of the any RRC message segmentation. That the receiving end receives the plurality of RRC message segmentations from the transmitting end in S302 may be specifically implemented in the following manner:

The RRC layer receives the plurality of RRC message segmentations from the transmitting end; the RRC layer decodes the plurality of RRC message segmentations to obtain a plurality of message segmentations, where any message segmentation in the plurality of message segmentations includes partial target information; the RRC layer sends the plurality of message segmentations and an information element of the any RRC message segmentation to the target information receiving layer; and the target information receiving layer receives the plurality of message segmentations and the information element of the any RRC message segmentation from the RRC layer.

It should be understood that both the RRC layer and the target information receiving layer belong to the receiving end. The target information receiving layer is a functional module that can implement S302, and may be a newly established independent layer, or may be some functions of another layer (an RRC layer, a PDCP layer, an RLC layer, or the like at the receiving end). This is not specifically limited in this application.

A person skilled in the art may understand that, when the target identification information, the RRC identification information, the segment identification information, and the identification information are information elements of the any RRC message segmentation, the plurality of message segmentations obtained when the RRC layer decodes the plurality of RRC message segmentations do not include the target identification information, the RRC identification information, the segment identification information, and the identification information. In this case, the RRC layer needs to send the plurality of message segmentations and the target identification information, the RRC identification information, the segment identification information, and the identification information to the target information receiving layer. In this way, the target information receiving layer can obtain the target information through splicing based on the partial information that is of the target information and that is included in each message segmentation in the plurality of message segmentations and the target identification information, the RRC identification information, the segment identification information, and the identification information that correspond to each message segmentation.

The foregoing describes, with reference to FIG. 2 to FIG. 6, the information transmission method provided in this application. With reference to FIG. 7, the following describes, by using an example in which a transmitting end is a source base station and a target base station, and a receiving end is UE, a method 700 provided in this application. The method 700 is applicable to a scenario in which the UE is handed over from the source base station to the target base station in a process in which the source base station transmits target information to the UE. In this case, the target base station transmits a remaining part of the target information to the UE. It may be understood that the source base station is a base station before the handover, and the target base station is a base station after the handover. The source base station may also be considered as a first transmitting end, and the target base station may also be considered as a second transmitting end. This is not specifically limited in this application.

FIG. 7 is a schematic flowchart of an information transmission method 700 according to an embodiment of this application. As shown in FIG. 7, the method 700 may include the following steps.

S701: A source base station determines a plurality of RRC message segmentations based on to-be-sent target information, where any RRC message segmentation in the plurality of RRC message segmentations includes partial information of the target information and at least one of the following information: target identification information indicating the target information, RRC identification information indicating an RRC message to which the any RRC message segmentation belongs, and segment identification information indicating the any RRC message segmentation.

It may be understood that a specific implementation of S701 is similar to that of S201. Details are not described herein again.

Optionally, the source base station includes N to-be-sent RRC messages, and N is a positive integer. That the source base station determines the plurality of RRC message segmentations based on the to-be-sent target information includes: The source base station encapsulates, based on an available capacity of a to-be-sent RRC message segmentation in the N to-be-sent RRC messages, the partial information of the target information into a to-be-sent RRC message segmentation whose available capacity meets a requirement, to obtain the plurality of RRC message segmentations. It may be understood that, in this case, a specific implementation of S701 is similar to that of S301. Details are not described herein again.

S702: The source base station sends a part of the plurality of RRC message segmentations to the UE. Correspondingly, the UE receives the part of the RRC message segmentations from the source base station.

It should be understood that the part of the RRC message segmentations is one or more of the plurality of RRC message segmentations, and a quantity of the part of the RRC message segmentations is less than a quantity of the plurality of RRC message segmentations. For example, the plurality of RRC message segmentations are 10 RRC message segmentations, and the part of the RRC message segmentations may be six RRC message segmentations. The plurality of RRC message segmentations include all of the target information, and the part of the RRC message segmentations includes partial target information of the target information. For example, the target information is a first AI model, the plurality of RRC message segmentations are 10 RRC message segmentations, the part of the RRC message segmentations is six RRC message segmentations, the 10 RRC message segmentations include a complete first AI model, and the six RRC message segmentations include a part of the first AI model.

S703: The source base station sends, to the target base station based on the part of the RRC message segmentations, target identification information and progress indication information indicating a transmission progress of the target information. Correspondingly, the target base station receives the target identification information and the progress indication information from the source base station.

It should be understood that the progress indication information may refer to a quantity of segments including the at least one segment of target information included in the target information and information indicating the at least one segment of target information that has been transmitted. A quantity of segments of the at least one segment of target information may be any positive integer, and the at least one segment of target information that has been transmitted is a part that is of the at least one segment of target information and that has been transmitted to the UE. For example, the quantity of segments of the at least one segment of target information is 3, and the at least one segment of target information that has been transmitted may be one segment. In this case, the progress indication information may include three segments and information indicating the one segment of target information that has been transmitted, for example, may be a first segment of target information. The target base station may determine the target information by using the target identification information, and may determine, by using the progress indication information, the part of the target information that has been received by the UE. In this way, the target base station may determine a remaining part of the target information other than the part of the target information that has been received by the UE in the target information.

Optionally, when the source base station sequentially transmits all segments of target information to the UE in a splicing sequence of the target information, the progress indication information may be further information including a total data volume of the target information and a data volume of the part of the target information that has been transmitted.

It should be understood that the splicing sequence of the target information is a sequence referenced when the UE splices the target information. For example, the target information includes a first segment of target information, a second segment of target information, and a third segment of target information, where the first segment of target information is a start part of the target information, the second segment of target information is a middle part of the target information, and the third segment of target information is an end part of the target information. In this case, a splicing sequence of the target information is the first segment of target information, the second segment of target information, and the third segment of target information. Both the total data volume of the target information and the data volume of the part of the target information that has been transmitted are values greater than or equal to 0, and the total data volume of the target information is greater than the data volume of the part of the target information that has been transmitted. For example, the target information is a first AI model, the first AI model includes 10 segments of the AI model, a data volume of each segment of the AI model is 8 kB, and five segments of the AI model have been transmitted. In this case, a total data volume of the first AI model is 80 kB, and a data volume of a part of the target information is 40 kB. In this way, the target base station can determine, based on the total data volume of the target information and the data volume of the part of the target information that has been transmitted, the remaining part of the target information other than the part of the target information that has been received by the UE in the target information.

In a possible implementation, the target identification information and the progress indication information may be encapsulated into a handover request (handover request) message.

S704: The target base station sends, to the source base station, acknowledgment indication information indicating that the target base station agrees to transmit a remaining part of the target information to the UE. Correspondingly, the source base station receives the acknowledgment indication information from the target base station.

It should be understood that the target base station sends the acknowledgment indication information to the source base station, indicating that the target base station may continue to transmit, to the UE, the remaining part of the target information other than the part of the target information that has been transmitted by the source base station to the UE in the target information.

In a possible implementation, the acknowledgment indication information may be encapsulated into a handover request acknowledgment (handover request acknowledge) message. Optionally, in addition to the acknowledgment indication information, the handover request acknowledgment message further includes reservation indication information indicating the UE to reserve the part of the target information that has been received. The reservation indication information may be encapsulated into an RRC container in the handover request acknowledgment message.

S705: The source base station sends RRC reconfiguration indication information to the UE based on the acknowledgment indication information, where the RRC reconfiguration indication information includes information indicating the UE to hand over to the target base station, and reservation indication information indicating the UE to reserve the part of the target information that has been received. Correspondingly, the UE receives the RRC reconfiguration indication information from the source base station.

It should be understood that, it is stipulated in the 3GPP protocol that after the UE is handed over from the source base station to the target base station, data information received from the source base station is deleted. The source base station sends the reservation indication information to the UE, so that the UE can reserve the part of the target information that has been received from the source base station. In this way, the target base station directly enables the UE to transmit the remaining part of the target information, which helps save resources.

S706: When the UE is handed over to the target base station based on the RRC reconfiguration indication information, the target base station sends the remaining part of the target information to the UE. Correspondingly, the UE receives the remaining part of the target information from the target base station.

It should be understood that S706 may be specifically implemented according to the method 200 or the method 300. Correspondingly, the target base station is the transmitting end in the method 200 or the method 300, the UE is the receiving end in the method 200 or the method 300, and the remaining part of the target information is the target information in the method 200 or the method 300. For details, refer to the foregoing descriptions. The details are not described herein again.

According to the information transmission method provided in this embodiment of this application, before the UE is handed over from the source base station to the target base station, the target identification information and the progress indication information indicating the transmission progress of the target information are sent to the target base station, and the reservation indication information indicating the UE to reserve the part of the target information that has been received from the source base station is sent to the UE, so that the UE can reserve the part of the target information. In this way, the target base station needs to send only the remaining part of the target information other than the part of the target information in the target information to the UE, thereby helping improve transmission efficiency of the target information, and save resources.

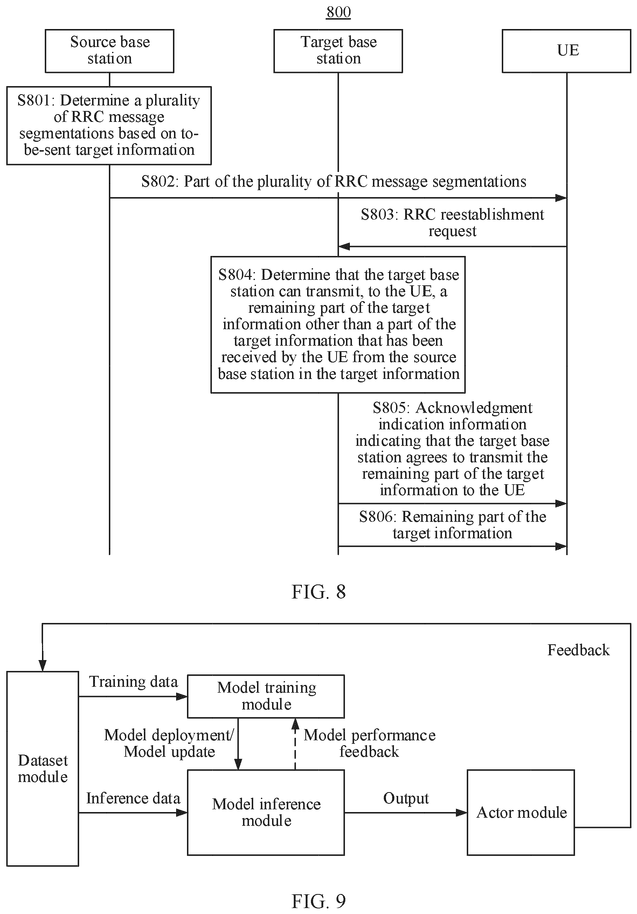

With reference to FIG. 8, the following describes, by using an example in which a transmitting end is a source base station and a target base station, and a receiving end is UE, a method 800 provided in this application. The method 800 is applicable to a scenario in which a radio link failure (radio link failure, RLF) occurs in a process in which the source base station transmits target information to the UE, the UE sends an RRC reestablishment request to the target base station, and when the target base station agrees to reestablish an RRC connection to the UE, the target base station transmits a remaining part of the target information to the UE. It may be understood that the source base station is a base station that establishes an RRC connection to the UE before the RLF occurs, the target base station is a base station that reestablishes an RRC connection to the UE after the RLF occurs, and the source base station and the target base station may be a same base station or different base stations. In this application scenario, the transmitting end may also be a source cell and a target cell. In this case, the source base station in the method 800 may be replaced with the source cell, and the target base station in the method 800 may be replaced with the target cell. The source base station may also be considered as a first transmitting end, and the target base station may also be considered as a second transmitting end. This is not specifically limited in this application.

FIG. 8 is a schematic flowchart of an information transmission method 800 according to an embodiment of this application. As shown in FIG. 8, the method 800 may include the following steps.

S801: A source base station determines a plurality of RRC message segmentations based on to-be-sent target information, where any RRC message segmentation in the plurality of RRC message segmentations includes partial information of the target information and at least one of the following information: target identification information indicating the target information, RRC identification information indicating an RRC message to which the any RRC message segmentation belongs, and segment identification information indicating the any RRC message segmentation.

It may be understood that a specific implementation of S801 is similar to that of S201. Details are not described herein again.

Optionally, the source base station includes N to-be-sent RRC messages, and N is a positive integer. That the source base station determines the plurality of RRC message segmentations based on the to-be-sent target information includes: The source base station encapsulates, based on an available capacity of a to-be-sent RRC message segmentation in the N to-be-sent RRC messages, the partial information of the target information into a to-be-sent RRC message segmentation whose available capacity meets a requirement, to obtain the plurality of RRC message segmentations. It may be understood that, in this case, a specific implementation of S801 is similar to that of S301. Details are not described herein again.

S802: The source base station sends a part of the plurality of RRC message segmentations to the UE. Correspondingly, the UE receives the part of the RRC message segmentations from the source base station.

It may be understood that a specific implementation of S802 is similar to that of S702. Details are not described herein again.

S803: When an RLF occurs on the UE, the UE sends an RRC reestablishment request (RRC reestablishment request) to a target base station. Correspondingly, the target base station receives the RRC reestablishment request from the UE.

It should be understood that the RRC reestablishment request is used by the UE to request the target base station to reestablish an RRC connection. The RRC reestablishment request may be a message sent by the UE to the target base station after the UE performs measurement according to the 3GPP protocol.

In a possible implementation, the RRC reestablishment request includes target identification information and progress indication information indicating a transmission progress of the target information.

It should be understood that, when receiving the part of the RRC message segmentations from the source base station, the UE stores the target identification information and the part of the target information included in the part of the RRC message segmentations. The progress indication information in this embodiment of this application is similar to the progress indication information in S703. For details, refer to the foregoing descriptions. The details are not described herein again. Optionally, the target identification information and the progress indication information may be encapsulated into RRC reestablishment complete (RRC reestablishment complete).

The UE directly sends the target identification information and the progress indication information to the target base station, so that the target base station can determine, based on the target identification information and the progress indication information, whether a remaining part of the target information can be transmitted to the UE.

In another possible implementation, the RRC reestablishment request includes UE identification information indicating the UE, base station identification information indicating the source base station, and cell identification information indicating the source cell. The target base station sends an information request to the source base station based on the UE identification information, the base station identification information, and the cell identification information, where the information request indicates the source base station to send, to the target base station, the target identification information, the progress indication information indicating the transmission progress of the target information, and UE context information corresponding to the UE identification information. The source base station sends the target identification information, the progress indication information, and the context information to the target base station. Correspondingly, the target base station receives the target identification information, the progress indication information, and the context information from the source base station.

It should be understood that the UE identification information may be a cell radio network temporary identifier (cell radio network temporary identifier, C-RNTI). The base station identification information may be an ID of the source base station. The cell identification information may be a physical cell ID of a source cell to which the UE is connected before an RLF occurs.

The UE sends the UE identification information, the base station identification information, and the cell identification information to the target base station. In this way, the target base station may request, from the source base station, the UE context information corresponding to the UE identification information, the target identification information, and the progress indication information, so that the target base station can determine the target information and the progress indication information of the target information through the source base station.

Optionally, the RRC reestablishment request may further include information indicating that the UE has target information that is not completely downloaded. Based on the information indicating that the UE has the target information that is not completely downloaded, the target base station can determine that the UE has the target information that is not completely downloaded in the source base station.

S804: The target base station determines whether the target base station can transmit, to the UE, a remaining part of the target information other than a part of the target information that has been received by the UE from the source base station in the target information.

S805: When the target base station determines that the remaining part of the target information can be transmitted to the UE, the target base station sends, to the UE, acknowledgment indication information indicating that the target base station agrees to transmit the remaining part of the target information to the UE. Correspondingly, the UE receives the acknowledgment indication information from the target base station.

Optionally, the target base station further sends, to the UE, reservation indication information indicating the UE to reserve a part of the target information that has been received. Correspondingly, the UE receives the reservation indication information from the target base station.

S806: The target base station sends the remaining part of the target information to the UE. Correspondingly, the UE receives the remaining part of the target information from the target base station.

It may be understood that a specific implementation of S806 is similar to that of S706. Details are not described herein again.

In an optional embodiment, when the target base station determines that the remaining part of the target information cannot be transmitted to the UE, the target base station sends, to the UE, deletion indication information indicating the UE to delete the part of the target information; the UE receives the deletion indication information from the target base station; and the UE deletes the part of the target information.

According to the information transmission method provided in this embodiment of this application, after the RLF occurs on the UE, in a process in which the UE reestablishes an RRC connection to the target base station, the target identification information and the progress indication information indicating the transmission progress of the target information are sent to the target base station, and the reservation indication information indicating the UE to reserve the part of the target information that has been received from the source base station is sent to the UE, so that the UE can reserve the part of the target information. In this way, the target base station needs to send only the remaining part of the target information other than the part of the target information in the target information to the UE, thereby helping improve transmission efficiency of the target information, and save resources.

It should be understood that sequence numbers of the foregoing methods do not mean execution sequences. The execution sequence of the processes should be determined based on functions and internal logic of the processes.

It may be understood that the target information may be any information, for example, may be an AI model or an AI module. AI is a technology that performs complex calculation by simulating a human brain. Currently, the AI model is widely applied to NR. Intelligent data collection and analysis can improve network performance and user experience.

The following describes in detail an application architecture of an AI model in NR with reference to FIG. 9.

FIG. 9 is a diagram of an application architecture of an AI model in NR according to an embodiment of this application. As shown in FIG. 9, a dataset (data source) module stores data input from a gNB, a gNB-CU, a gNB-DU, UE, or another management entity, and is used as a database for AI model training and data analysis and inference. A model training (model training) module analyzes training data (training data) provided by the dataset module and provides an optimal AI model. A model inference (model inference) module uses the optimal AI model. Based on inference data (inference data) provided by the dataset module, the model inference module can predict network running properly and guide network policy adjustment. The related policy adjustment may be planned by an actor (actor) module entity in a unified manner, and sent to a plurality of network entities for operation. In addition, after a related policy is applied, specific performance of the network can be input to a database again for storage.

For example, the AI model may be applied to load balancing (load balancing). The base station collects load information, energy consumption information, energy efficiency information, track information of the UE, a measurement result, and the like of the base station and a neighboring cell, and predicts a load direction of the base station. The base station further properly selects some UEs based on cell usage, a KPI requirement, and the like, and hands over the some UEs to a neighboring cell, or receives the some UEs from a neighboring cell, so that loads of base stations in the entire network are balanced, and a case in which because some base stations are overloaded, normal services are affected and some base station resources are idle is reduced. The AI model can also be applied to mobility optimization (mobility optimization). The base station collects historical track information of the UE and predicts a future track of the UE based on measurement information of the UE. The base station determines, based on the predicted rack, whether to hand over the UE, delivers handover configurations in advance, and notifies a target cell to prepare access resources. This reduces a delay of the UE in a handover process and reduces a probability of handover failures and access failures.

It should be understood that the AI model may be a complete AI model that can run independently at the receiving end (a format and a compilation environment of the AI model are not limited), or may be an AI-related functional module that runs at the receiving end to obtain specific output for use by the transmitting end, or may even be another non-AI-related functional module. This is not specifically limited in this application.

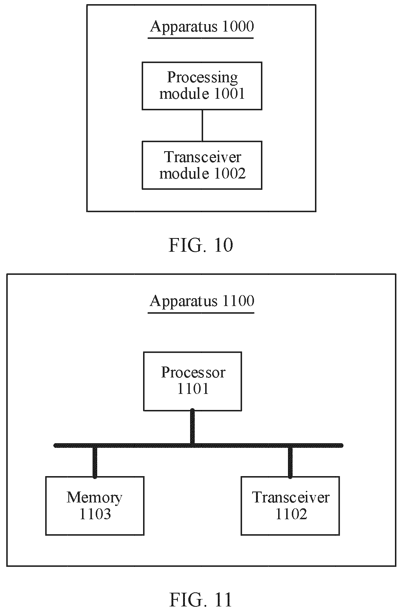

The foregoing describes in detail the information transmission method in embodiments of this application with reference to FIG. 2 to FIG. 9. The following describes in detail an information transmission apparatus in embodiments of this application with reference to FIG. 10 and FIG. 11. The information transmission apparatus includes a corresponding module or unit configured to perform each part in the foregoing embodiments. The module or unit may be software, hardware, or a combination of software and hardware. The following briefly describes the information transmission apparatus by using examples. For details about solution implementation, refer to the descriptions in the foregoing method embodiments. The details are not described below again.

FIG. 10 is a diagram of a structure of an information transmission apparatus 1000 according to an embodiment of this application. As shown in FIG. 10, the apparatus 1000 includes a processing module 1001 and a transceiver module 1002.

In a possible implementation, the apparatus 1000 is configured to implement steps corresponding to the transmitting end in the method 200, the method 300, the method 700, or the method 800.

The processing module 1001 is configured to determine a plurality of radio resource control RRC message segmentations based on to-be-sent target information, where any RRC message segmentation in the plurality of RRC message segmentations includes partial information of the target information and at least one of the following information: target identification information indicating the target information, RRC identification information indicating an RRC message to which the any RRC message segmentation belongs, and segment identification information indicating the any RRC message segmentation.

The transceiver module 1002 is configured to send the plurality of RRC message segmentations to a receiving end.

Optionally, the transceiver module 1002 is specifically configured to alternately send the plurality of RRC message segmentations to the receiving end based on priorities of RRC messages corresponding to respective RRC identification information of the plurality of RRC message segmentations.

Optionally, the processing module 1001 is further configured to: obtain capability information of the receiving end, where the capability information includes information indicating buffer space of the receiving end and information indicating a maximum quantity of RRC segments supported by the receiving end; and determine, based on the capability information, that the receiving end has a capability of receiving the plurality of RRC message segmentations.

Optionally, the plurality of RRC message segmentations are sent based on a first-type signaling radio bearer SRB and/or a second-type SRB, a maximum quantity of segments supported by the second-type SRB is greater than a maximum quantity of segments of the first-type SRB, and a transmission priority of the second-type SRB is lower than a transmission priority of the first-type SRB.

Optionally, when the plurality of RRC message segmentations are sent based on the second-type SRB, if no other RRC message needs to be delivered on the second-type SRB, and an air interface load of the transmitting end meets a preset low load condition, an RRC message segmentation with a large data volume that is included in the plurality of RRC message segmentations is preferentially sent; or if another RRC message needs to be delivered on the second-type SRB, and/or an air interface load of the transmitting end does not meet a preset low load condition, an RRC message segmentation with a small data volume that is included in the plurality of RRC message segmentations is preferentially sent.

Optionally, in a process in which the apparatus 1000 sends the plurality of RRC message segmentations to the receiving end, if an RRC message with a higher priority than the plurality of RRC message segmentations is received, the apparatus 1000 preferentially sends the RRC message with the higher priority than the plurality of RRC message segmentations.

Optionally, the apparatus 1000 includes N to-be-sent RRC messages, and N is a positive integer. The processing module 1001 is specifically configured to encapsulate, based on an available capacity of a to-be-sent RRC message segmentation in the N to-be-sent RRC messages, the partial information of the target information into a to-be-sent RRC message segmentation whose available capacity meets a requirement, to obtain the plurality of RRC message segmentations.

Optionally, the processing module 1001 includes an RRC layer and a target information transport layer. The target information transport layer is configured to send an indication message to the RRC layer, where the indication message indicates the RRC layer to send an available capacity of a to-be-sent RRC message segmentation in each of the N to-be-sent RRC messages to the target information transport layer.

The RRC layer is configured to: receive the indication message from the target information transport layer; and send the available capacity of the to-be-sent RRC message segmentation in each of the N to-be-sent RRC messages to the target information transport layer based on the indication message.

The target information transport layer is further configured to: receive the available capacity of the to-be-sent RRC message segmentation in each of the N to-be-sent RRC messages from the RRC layer; divide the target information into at least one segment of target information based on the available capacity of the to-be-sent RRC message segmentation in each of the N to-be-sent RRC messages from the RRC layer; determine, based on the at least one segment of target information and the available capacity of the to-be-sent RRC message segmentation in each of the N to-be-sent RRC messages, a correspondence between any segment of target information in the at least one segment of target information and a to-be-sent RRC message segmentation used to encapsulate the any segment of target information; and send the at least one segment of target information and the correspondence to the RRC layer.

The RRC layer is further configured to receive the at least one segment of target information and the correspondence from the target information transport layer; and the RRC layer encapsulates, based on the correspondence, the any segment of target information into the to-be-sent RRC message segmentation corresponding to the any segment of target information.

Optionally, the processing module 1001 includes an RRC layer and a target information transport layer. The RRC layer is configured to send an available capacity of a to-be-sent RRC message segmentation in each of the N to-be-sent RRC messages to the target information transport layer.

The target information transport layer is configured to: receive the available capacity of the to-be-sent RRC message segmentation in each of the N to-be-sent RRC messages from the RRC layer; divide the target information into at least one segment of target information based on the available capacity of the to-be-sent RRC message segmentation in each of the N to-be-sent RRC messages from the RRC layer; determine, based on the at least one segment of target information and the available capacity of the to-be-sent RRC message segmentation in each of the N to-be-sent RRC messages, a correspondence between any segment of target information in the at least one segment of target information and a to-be-sent RRC message segmentation used to encapsulate the any segment of target information; and send the at least one segment of target information and the correspondence to the RRC layer.

The RRC layer is further configured to: receive the at least one segment of target information and the correspondence from the target information transport layer; and encapsulate, based on the correspondence, the any segment of target information into the to-be-sent RRC message segmentation corresponding to the any segment of target information.

Optionally, the processing module 1001 includes an RRC layer and a target information transport layer. The target information transport layer is configured to: divide the target information into at least one segment of target information; and send the at least one segment of target information to the RRC layer.

The RRC layer is configured to: receive the at least one segment of target information from the target information transport layer; and encapsulate, based on the at least one segment of target information and an available capacity of a to-be-sent RRC message segmentation in each of the N to-be-sent RRC messages, each segment of target information in the at least one segment of target information into each to-be-sent RRC message segmentation whose available capacity meets a requirement.

Optionally, the RRC layer is further configured to send a completion indication message to the target information transport layer, where the completion indication message indicates that transmission of the target information is completed.

Optionally, the any RRC message segmentation further includes identification information, and the identification information indicates whether partial target information in the any RRC message segmentation is a last part of the target information.

Optionally, the target identification information indicating the target information, the RRC identification information indicating the RRC message to which the any RRC message segmentation belongs, the segment identification information indicating the any RRC message segmentation, and the identification information are all information elements of the any RRC message segmentation.

In another possible implementation, the apparatus 1000 is configured to implement steps corresponding to the receiving end in the method 200, the method 300, the method 700, or the method 800.

The transceiver module 1002 is configured to receive a plurality of radio resource control RRC message segmentations from a transmitting end, where any RRC message segmentation in the plurality of RRC message segmentations includes partial information of target information and at least one of the following information: target identification information indicating the target information, RRC identification information indicating an RRC message to which the any RRC message segmentation belongs, and segment identification information indicating the any RRC message segmentation.

The processing module 1001 is configured to splice, based on the target identification information, the RRC identification information, and the segment identification information, partial information that is of the target information and that is included in the plurality of RRC message segmentations into the target information.

Optionally, the transceiver module 1002 is further configured to send capability information of the apparatus 1000 to the transmitting end, where the capability information includes information indicating buffer space of the apparatus 1000 and information indicating a maximum quantity of RRC segments supported by the apparatus 1000.

Optionally, the transceiver module 1002 includes an RRC layer and a target information receiving layer. The RRC layer is configured to: receive the plurality of RRC message segmentations from the transmitting end; decode the plurality of RRC message segmentations to obtain a plurality of message segmentations, where any message segmentation in the plurality of message segmentations includes partial information of target information and at least one of the following information: target identification information indicating the target information, RRC identification information indicating an RRC message to which the any message segmentation belongs, and segment identification information indicating the any message segmentation; and send the plurality of message segmentations to the target information receiving layer.

The target information receiving layer is configured to receive the plurality of message segmentations from the RRC layer.

Optionally, the any RRC message segmentation further includes identification information, and the identification information indicates whether partial target information in the any RRC message segmentation is a last part of the target information.

Optionally, the transceiver module 1002 includes an RRC layer and a target information receiving layer, and the target identification information indicating the target information, the RRC identification information indicating the RRC message to which the any RRC message segmentation belongs, the segment identification information indicating the any RRC message segmentation, and the identification information are information elements of the any RRC message segmentation.

The RRC layer is configured to: receive the plurality of RRC message segmentations from the transmitting end; decode the plurality of RRC message segmentations to obtain a plurality of message segmentations, where any message segmentation in the plurality of message segmentations includes partial target information; and send the plurality of message segmentations and an information element of the any RRC message segmentation to the target information receiving layer.

The target information receiving layer is configured to receive the plurality of message segmentations and the information element of the any RRC message segmentation from the RRC layer.

It should be understood that the apparatus 1000 herein is represented in a form of a functional module. The term "module" herein may be an application-specific integrated circuit (application-specific integrated circuit, ASIC), an electronic circuit, a processor (like a shared processor, a dedicated processor, or a group processor) configured to execute one or more software or firmware programs, a memory, a combinational logic circuit, and/or another suitable component that supports the described function. In an optional example, a person skilled in the art may understand that the apparatus 1000 may be specifically the transmitting end or the receiving end in the foregoing embodiments, and the apparatus 1000 may be configured to perform procedures and/or steps corresponding to the transmitting end or the receiving end in the foregoing method embodiments. To avoid repetition, details are not described herein again.

The apparatus 1000 has functions of implementing corresponding steps performed by the transmitting end or the receiving end in the foregoing method. The functions may be implemented by hardware, or may be implemented by hardware executing corresponding software. The hardware or the software includes one or more modules corresponding to the functions. For example, the processing module 1001 may include a determining module, and the determining module may be configured to implement steps and/or procedures that correspond to the processing module 1001 and that are used to perform a determining action.

In this embodiment of this application, the apparatus 1000 in FIG. 10 may also be a chip, for example, an SoC. Correspondingly, the processing module 1001 may be a transceiver circuit of the chip. This is not limited herein.

FIG. 11 is a diagram of a structure of an apparatus 1100 according to an embodiment of this application. The apparatus 1100 includes a processor 1101, a transceiver 1102, and a memory 1103. The processor 1101, the transceiver 1102, and the memory 1103 communicate with each other through an internal connection path. The memory 1103 is configured to store instructions. The processor 1101 is configured to execute the instructions stored in the memory 1103, to control the transceiver 1102 to send a signal and/or receive a signal.

It should be understood that the apparatus 1100 may be specifically the transmitting end or the receiving end in the foregoing embodiments, and may be configured to perform steps and/or procedures corresponding to the transmitting end or the receiving end in the foregoing method embodiments. Optionally, the memory 1103 may include a read-only memory and a random access memory, and provide instructions and data to the processor. A part of the memory may further include a non-volatile random access memory. For example, the memory may further store information about a device type. The processor 1101 may be configured to execute the instructions stored in the memory. When the processor 1101 executes the instructions stored in the memory, the processor 1101 is configured to perform steps and/or procedures in the foregoing method embodiments. The transceiver 1102 may include a transmitter and a receiver. The transmitter may be configured to implement steps and/or procedures that correspond to the transceiver and that are used to perform a sending action. The receiver may be configured to implement steps and/or procedures that correspond to the transceiver and that are used to perform a receiving action.

It should be understood that in embodiments of this application, the processor may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art such as a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

This application further provides a computer-readable storage medium. The computer-readable storage medium is configured to store a computer program, and the computer program is used to implement the method shown in the foregoing method embodiments.

This application further provides a computer program product. The computer program product includes a computer program (which may also be referred to as code or instructions). When the computer program is run on a computer, the computer may perform the method shown in the foregoing method embodiments.

A person of ordinary skill in the art may be aware that, in combination with the examples described in embodiments disclosed in this specification, modules and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into modules is merely logical function division, and may be other division in an actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, and may be located in one position, or may be distributed on a plurality of network modules. Some or all of the modules may be selected based on actual requirements to achieve the objectives of the solutions of embodiments.

In addition, functional modules in embodiments of this application may be integrated into one processing module, or each of the modules may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. An information transmission method, comprising:
determining, by a transmitting end, a plurality of radio resource control RRC message segmentations based on to-be-sent target information, wherein any RRC message segmentation in the plurality of RRC message segmentations comprises partial information of the target information and at least one of the following information: target identification information indicating the target information, RRC identification information indicating an RRC message to which the any RRC message segmentation belongs, and segment identification information indicating the any RRC message segmentation; and
sending, by the transmitting end, the plurality of RRC message segmentations to a receiving end.

2. The method according to claim 1, wherein sending, by the transmitting end, the plurality of RRC message segmentations to the receiving end comprises:
alternately sending, by the transmitting end, the plurality of RRC message segmentations to the receiving end based on priorities of RRC messages corresponding to respective RRC identification information of the plurality of RRC message segmentations.

3. The method according to claim 1 or 2, wherein before determining, by the transmitting end, the plurality of radio resource control RRC message segmentations based on the to-be-sent target information, the method further comprises:
obtaining, by the transmitting end, capability information of the receiving end, wherein the capability information comprises information indicating buffer space of the receiving end and information indicating a maximum quantity of RRC segments supported by the receiving end; and
determining, by the transmitting end based on the capability information, that the receiving end has a capability of receiving the plurality of RRC message segmentations.

4. The method according to claims 1 to 3, wherein the plurality of RRC message segmentations are sent based on a first-type signaling radio bearer SRB and/or a second-type SRB, a maximum quantity of segments supported by the second-type SRB is greater than a maximum quantity of segments of the first-type SRB, and a transmission priority of the second-type SRB is lower than a transmission priority of the first-type SRB.

5. The method according to claim 4, wherein when the plurality of RRC message segmentations are sent based on the second-type SRB, if no other RRC message needs to be delivered on the second-type SRB, and an air interface load of the transmitting end meets a preset low load condition, an RRC message segmentation with a large data volume that is comprised in the plurality of RRC message segmentations is preferentially sent; or if another RRC message needs to be delivered on the second-type SRB, and/or an air interface load of the transmitting end does not meet a preset low load condition, an RRC message segmentation with a small data volume that is comprised in the plurality of RRC message segmentations is preferentially sent.

6. The method according to any one of claims 1 to 5, wherein in a process in which the transmitting end sends the plurality of RRC message segmentations to the receiving end, if an RRC message with a higher priority than the plurality of RRC message segmentations is received, the transmitting end preferentially sends the RRC message with the higher priority than the plurality of RRC message segmentations.

7. The method according to any one of claims 1 to 6, wherein the transmitting end comprises N to-be-sent RRC messages, and N is a positive integer; and
determining, by the transmitting end, the plurality of radio resource control RRC message segmentations based on the to-be-sent target information comprises:
encapsulating, by the transmitting end based on an available capacity of a to-be-sent RRC message segmentation in the N to-be-sent RRC messages, the partial information of the target information into a to-be-sent RRC message segmentation whose available capacity meets a requirement, to obtain the plurality of RRC message segmentations.

8. The method according to claim 7, wherein the transmitting end comprises an RRC layer and a target information transport layer; and
encapsulating, by the transmitting end based on an available capacity of a to-be-sent RRC message segmentation in each of the N to-be-sent RRC messages, the partial information of the target information into a to-be-sent RRC message segmentation whose available capacity meets a requirement comprises:
sending, by the target information transport layer, an indication message to the RRC layer, wherein the indication message indicates the RRC layer to send the available capacity of the to-be-sent RRC message segmentation in each of the N to-be-sent RRC messages to the target information transport layer;
receiving, by the RRC layer, the indication message from the target information transport layer;
sending, by the RRC layer, the available capacity of the to-be-sent RRC message segmentation in each of the N to-be-sent RRC messages to the target information transport layer based on the indication message;
receiving, by the target information transport layer, the available capacity of the to-be-sent RRC message segmentation in each of the N to-be-sent RRC messages from the RRC layer;
dividing, by the target information transport layer, the target information into at least one segment of target information based on the available capacity of the to-be-sent RRC message segmentation in each of the N to-be-sent RRC messages from the RRC layer;
determining, by the target information transport layer based on the at least one segment of target information and the available capacity of the to-be-sent RRC message segmentation in each of the N to-be-sent RRC messages, a correspondence between any segment of target information in the at least one segment of target information and a to-be-sent RRC message segmentation used to encapsulate the any segment of target information;
sending, by the target information transport layer, the at least one segment of target information and the correspondence to the RRC layer;
receiving, by the RRC layer, the at least one segment of target information and the correspondence from the target information transport layer; and
encapsulating, by the RRC layer based on the correspondence, the any segment of target information into the to-be-sent RRC message segmentation corresponding to the any segment of target information.

9. The method according to claim 7, wherein the transmitting end comprises an RRC layer and a target information transport layer; and
encapsulating, by the transmitting end based on an available capacity of a to-be-sent RRC message segmentation in each of the N to-be-sent RRC messages, the partial information of the target information into a to-be-sent RRC message segmentation whose available capacity meets a requirement comprises:
sending, by the RRC layer, the available capacity of the to-be-sent RRC message segmentation in each of the N to-be-sent RRC messages to the target information transport layer;
receiving, by the target information transport layer, the available capacity of the to-be-sent RRC message segmentation in each of the N to-be-sent RRC messages from the RRC layer;
dividing, by the target information transport layer, the target information into at least one segment of target information based on the available capacity of the to-be-sent RRC message segmentation in each of the N to-be-sent RRC messages from the RRC layer;
determining, by the target information transport layer based on the at least one segment of target information and the available capacity of the to-be-sent RRC message segmentation in each of the N to-be-sent RRC messages, a correspondence between any segment of target information in the at least one segment of target information and a to-be-sent RRC message segmentation used to encapsulate the any segment of target information;
sending, by the target information transport layer, the at least one segment of target information and the correspondence to the RRC layer;
receiving, by the RRC layer, the at least one segment of target information and the correspondence from the target information transport layer; and
encapsulating, by the RRC layer based on the correspondence, the any segment of target information into the to-be-sent RRC message segmentation corresponding to the any segment of target information.

10. The method according to claim 7, wherein the transmitting end comprises an RRC layer and a target information transport layer; and
determining, by the transmitting end, the plurality of radio resource control RRC message segmentations based on the to-be-sent target information comprises:
dividing, by the target information transport layer, the target information into at least one segment of target information;
sending, by the target information transport layer, the at least one segment of target information to the RRC layer;
receiving, by the RRC layer, the at least one segment of target information from the target information transport layer; and
encapsulating, by the RRC layer based on the at least one segment of target information and an available capacity of a to-be-sent RRC message segmentation in each of the N to-be-sent RRC messages, each segment of target information in the at least one segment of target information into each to-be-sent RRC message segmentation whose available capacity meets a requirement.

11. The method according to claim 10, wherein after sending, by the transmitting end, the plurality of RRC message segmentations to the receiving end, the method further comprises:
sending, by the RRC layer, a completion indication message to the target information transport layer, wherein the completion indication message indicates that transmission of the target information is completed.

12. The method according to any one of claims 1 to 11, wherein the any RRC message segmentation further comprises identification information, and the identification information indicates whether partial target information in the any RRC message segmentation is a last part of the target information.

13. The method according to claim 12, wherein the target identification information indicating the target information, the RRC identification information indicating the RRC message to which the any RRC message segmentation belongs, the segment identification information indicating the any RRC message segmentation, and the identification information are all information elements of the any RRC message segmentation.

14. An information transmission method, comprising:
receiving, by a receiving end, a plurality of radio resource control RRC message segmentations from a transmitting end, wherein any RRC message segmentation in the plurality of RRC message segmentations comprises partial information of target information and at least one of the following information: target identification information indicating the target information, RRC identification information indicating an RRC message to which the any RRC message segmentation belongs, and segment identification information indicating the any RRC message segmentation; and
splicing, by the receiving end based on the target identification information, the RRC identification information, and the segment identification information, partial information that is of the target information and that is comprised in the plurality of RRC message segmentations into the target information.

15. The method according to claim 14, wherein before receiving, by the receiving end, the plurality of radio resource control RRC message segmentations from the transmitting end, the method further comprises:
sending, by the receiving end, capability information of the receiving end to the transmitting end, wherein the capability information comprises information indicating buffer space of the receiving end and information indicating a maximum quantity of RRC segments supported by the receiving end.

16. The method according to claim 14 or 15, wherein the receiving end comprises an RRC layer and a target information receiving layer; and
receiving, by the receiving end, the plurality of radio resource control RRC message segmentations from the transmitting end comprises:
receiving, by the RRC layer, the plurality of RRC message segmentations from the transmitting end;
decoding, by the RRC layer, the plurality of RRC message segmentations to obtain a plurality of message segmentations, wherein any message segmentation in the plurality of message segmentations comprises partial information of target information and at least one of the following information: target identification information indicating the target information, RRC identification information indicating an RRC message to which the any message segmentation belongs, and segment identification information indicating the any message segmentation;
sending, by the RRC layer, the plurality of message segmentations to the target information receiving layer; and
receiving, by the target information receiving layer, the plurality of message segmentations from the RRC layer.

17. The method according to claim 14 or 15, wherein the any RRC message segmentation further comprises identification information, and the identification information indicates whether partial target information in the any RRC message segmentation is a last part of the target information.

18. The method according to claim 17, wherein the receiving end comprises an RRC layer and a target information receiving layer; and the target identification information indicating the target information, the RRC identification information indicating the RRC message to which the any RRC message segmentation belongs, the segment identification information indicating the any RRC message segmentation, and the identification information are information elements of the any RRC message segmentation; and
receiving, by the receiving end, the plurality of radio resource control RRC message segmentations from the transmitting end comprises:
receiving, by the RRC layer, the plurality of RRC message segmentations from the transmitting end;
decoding, by the RRC layer, the plurality of RRC message segmentations to obtain a plurality of message segmentations, wherein any message segmentation in the plurality of message segmentations comprises partial target information;
sending, by the RRC layer, the plurality of message segmentations and an information element of the any RRC message segmentation to the target information receiving layer; and
receiving, by the target information receiving layer, the plurality of message segmentations and the information element of the any RRC message segmentation from the RRC layer.

19. An information transmission apparatus, comprising:
a processing module, configured to determine a plurality of radio resource control RRC message segmentations based on to-be-sent target information, wherein any RRC message segmentation in the plurality of RRC message segmentations comprises partial information of the target information and at least one of the following information: target identification information indicating the target information, RRC identification information indicating an RRC message to which the any RRC message segmentation belongs, and segment identification information indicating the any RRC message segmentation; and
a transceiver module, configured to send the plurality of RRC message segmentations to a receiving end.

20. The apparatus according to claim 19, wherein the transceiver module is specifically configured to:
alternately send the plurality of RRC message segmentations to the receiving end based on priorities of RRC messages corresponding to respective RRC identification information of the plurality of RRC message segmentations.

21. The apparatus according to claim 19 or 20, wherein the processing module is further configured to:
obtain capability information of the receiving end, wherein the capability information comprises information indicating buffer space of the receiving end and information indicating a maximum quantity of RRC segments supported by the receiving end; and
determine, based on the capability information, that the receiving end has a capability of receiving the plurality of RRC message segmentations.

22. The apparatus according to claims 19 to 21, wherein the plurality of RRC message segmentations are sent based on a first-type signaling radio bearer SRB and/or a second-type SRB, a maximum quantity of segments supported by the second-type SRB is greater than a maximum quantity of segments of the first-type SRB, and a transmission priority of the second-type SRB is lower than a transmission priority of the first-type SRB.

23. The apparatus according to claim 22, wherein when the plurality of RRC message segmentations are sent based on the second-type SRB, if no other RRC message needs to be delivered on the second-type SRB, and an air interface load of the transmitting end meets a preset low load condition, an RRC message segmentation with a large data volume that is comprised in the plurality of RRC message segmentations is preferentially sent; or if another RRC message needs to be delivered on the second-type SRB, and/or an air interface load of the transmitting end does not meet a preset low load condition, an RRC message segmentation with a small data volume that is comprised in the plurality of RRC message segmentations is preferentially sent.

24. The apparatus according to any one of claims 19 to 23, wherein in a process in which the apparatus sends the plurality of RRC message segmentations to the receiving end, if an RRC message with a higher priority than the plurality of RRC message segmentations is received, the apparatus preferentially sends the RRC message with the higher priority than the plurality of RRC message segmentations.

25. The apparatus according to any one of claims 19 to 24, wherein the apparatus comprises N to-be-sent RRC messages, and N is a positive integer; and
the processing module is specifically configured to:
encapsulate, based on an available capacity of a to-be-sent RRC message segmentation in the N to-be-sent RRC messages, the partial information of the target information into a to-be-sent RRC message segmentation whose available capacity meets a requirement, to obtain the plurality of RRC message segmentations.

26. The apparatus according to claim 25, wherein the processing module comprises an RRC layer and a target information transport layer;
the target information transport layer is configured to an indication message to the RRC layer, wherein the indication message indicates the RRC layer to send an available capacity of a to-be-sent RRC message segmentation in each of the N to-be-sent RRC messages to the target information transport layer;
the RRC layer is configured to: receive the indication message from the target information transport layer; and send the available capacity of the to-be-sent RRC message segmentation in each of the N to-be-sent RRC messages to the target information transport layer based on the indication message;
the target information transport layer is further configured to: receive the available capacity of the to-be-sent RRC message segmentation in each of the N to-be-sent RRC messages from the RRC layer; divide the target information into at least one segment of target information based on the available capacity of the to-be-sent RRC message segmentation in each of the N to-be-sent RRC messages from the RRC layer; determine, based on the at least one segment of target information and the available capacity of the to-be-sent RRC message segmentation in each of the N to-be-sent RRC messages, a correspondence between any segment of target information in the at least one segment of target information and a to-be-sent RRC message segmentation used to encapsulate the any segment of target information; and send the at least one segment of target information and the correspondence to the RRC layer; and
the RRC layer is further configured to: receive the at least one segment of target information and the correspondence from the target information transport layer; and encapsulate, based on the correspondence, the any segment of target information into the to-be-sent RRC message segmentation corresponding to the any segment of target information.

27. The apparatus according to claim 25, wherein the processing module comprises an RRC layer and a target information transport layer;
the RRC layer is configured to send an available capacity of a to-be-sent RRC message segmentation in each of the N to-be-sent RRC messages to the target information transport layer;
the target information transport layer is configured to: receive the available capacity of the to-be-sent RRC message segmentation in each of the N to-be-sent RRC messages from the RRC layer; divide the target information into at least one segment of target information based on the available capacity of the to-be-sent RRC message segmentation in each of the N to-be-sent RRC messages from the RRC layer; determine, based on the at least one segment of target information and the available capacity of the to-be-sent RRC message segmentation in each of the N to-be-sent RRC messages, a correspondence between any segment of target information in the at least one segment of target information and a to-be-sent RRC message segmentation used to encapsulate the any segment of target information; and send the at least one segment of target information and the correspondence to the RRC layer; and
the RRC layer is further configured to: receive the at least one segment of target information and the correspondence from the target information transport layer; and encapsulate, based on the correspondence, the any segment of target information into the to-be-sent RRC message segmentation corresponding to the any segment of target information.

28. The apparatus according to claim 25, wherein the processing module comprises an RRC layer and a target information transport layer;
the target information transport layer is configured to: divide the target information into at least one segment of target information; and send the at least one segment of target information to the RRC layer; and
the RRC layer is configured to: receive the at least one segment of target information from the target information transport layer; and encapsulate, based on the at least one segment of target information and an available capacity of a to-be-sent RRC message segmentation in each of the N to-be-sent RRC messages, each segment of target information in the at least one segment of target information into each to-be-sent RRC message segmentation whose available capacity meets a requirement.

29. The apparatus according to claim 28, wherein the RRC layer is further configured to send a completion indication message to the target information transport layer, wherein the completion indication message indicates that transmission of the target information is completed.

30. The apparatus according to any one of claims 19 to 29, wherein the any RRC message segmentation further comprises identification information, and the identification information indicates whether partial target information in the any RRC message segmentation is a last part of the target information.

31. The apparatus according to claim 30, wherein the target identification information indicating the target information, the RRC identification information indicating the RRC message to which the any RRC message segmentation belongs, the segment identification information indicating the any RRC message segmentation, and the identification information are all information elements of the any RRC message segmentation.

32. An information transmission apparatus, comprising:
a transceiver module, configured to receive a plurality of radio resource control RRC message segmentations from a transmitting end, wherein any RRC message segmentation in the plurality of RRC message segmentations comprises partial information of target information and at least one of the following information: target identification information indicating the target information, RRC identification information indicating an RRC message to which the any RRC message segmentation belongs, and segment identification information indicating the any RRC message segmentation; and
a processing module, configured to splice, based on the target identification information, the RRC identification information, and the segment identification information, partial information that is of the target information and that is comprised in the plurality of RRC message segmentations into the target information.

33. The apparatus according to claim 32, wherein the transceiver module is further configured to:
send capability information of the apparatus to the transmitting end, wherein the capability information comprises information indicating buffer space of the apparatus and information indicating a maximum quantity of RRC segments supported by the apparatus.

34. The apparatus according to claim 32 or 33, wherein the transceiver module comprises an RRC layer and a target information receiving layer;
the RRC layer is configured to: receive the plurality of RRC message segmentations from the transmitting end; decode the plurality of RRC message segmentations to obtain a plurality of message segmentations, wherein any message segmentation in the plurality of message segmentations comprises partial information of target information and at least one of the following information: target identification information indicating the target information, RRC identification information indicating an RRC message to which the any message segmentation belongs, and segment identification information indicating the any message segmentation; and send the plurality of message segmentations to the target information receiving layer; and
the target information receiving layer is configured to receive the plurality of message segmentations from the RRC layer.

35. The apparatus according to claim 32 or 33, wherein the any RRC message segmentation further comprises identification information, and the identification information indicates whether partial target information in the any RRC message segmentation is a last part of the target information.

36. The apparatus according to claim 35, wherein the transceiver module comprises an RRC layer and a target information receiving layer; and the target identification information indicating the target information, the RRC identification information indicating the RRC message to which the any RRC message segmentation belongs, the segment identification information indicating the any RRC message segmentation, and the identification information are information elements of the any RRC message segmentation;
the RRC layer is configured to: receive the plurality of RRC message segmentations from the transmitting end; decode the plurality of RRC message segmentations to obtain a plurality of message segmentations, wherein any message segmentation in the plurality of message segmentations comprises partial target information; and send the plurality of message segmentations and an information element of the any RRC message segmentation to the target information receiving layer; and
the target information receiving layer is configured to receive the plurality of message segmentations and the information element of the any RRC message segmentation from the RRC layer.

37. An information transmission apparatus, comprising a processor, wherein the processor is coupled to a memory, the memory is configured to store a computer program, and when the processor invokes the computer program, the apparatus is enabled to perform the method according to any one of claims 1 to 18.

38. A computer-readable storage medium, configured to store a computer program, wherein the computer program comprises instructions used to implement the method according to any one of claims 1 to 18.

39. A computer program product, wherein the computer program product comprises computer program code, and when the computer program code is run on a computer, the computer is enabled to perform the method according to any one of claims 1 to 18.
